# EUROPEAN PATENT APPLICATION

(11) **EP 4 503 804 A1**
(43) Date of publication of application: **05.02.2025**
(21) Application number: 23791007.0
(22) Date of filing: 30.03.2023
(51) Int. Cl.: H04W 72/04, H04W 72/12

(54) **DATA TRANSMISSION METHOD AND APPARATUS**

(30) Priority: 19.04.2022 CN 202210412661
(71) Applicant: Huawei Technologies Co., Ltd., Shenzhen, Guangdong 518129 (CN)
(72) Inventor: YAN, Mao, Shenzhen, Guangdong 518129 (CN); LIU, Fengwei, Shenzhen, Guangdong 518129 (CN)
(74) Representative: Isarpatent
(86) International application number: PCT/CN2023/085234
(87) International publication number: WO 2023/202350

(57) **Abstract**

Embodiments of this application provide a data transmission method and an apparatus. The method includes: A relay device receives configuration information from a network device, where the configuration information indicates to transmit a first signal and a second signal in a target time period, the first signal is a signal for communication between the relay device and the network device, and the second signal is a signal transmitted with assistance of the relay device. When the first signal and/or the second signal meet/meets a first condition, the relay device transmits the first signal in the target time period, and when the first signal and/or the second signal do/does not meet a first condition, the relay device transmits the second signal in the target time period. According to this application, the relay device can determine a signal to be transmitted in the target time period, to avoid relay performance deterioration resulting from confliction between the first signal and the second signal.

## Description

This application claims priority to Chinese Patent Application No. 202210412661.X, filed with the China National Intellectual Property Administration on April 19, 2022 and entitled "DATA TRANSMISSION METHOD AND APPARATUS", which is incorporated herein by reference in its entirety.

### TECHNICAL FIELD

This application relates to the communication field, and more specifically, to a data transmission method and an apparatus.

### BACKGROUND

In conventional technologies, direct communication between a network device and a terminal device may be affected by many factors. For example, when the network device and the terminal device are far away from each other, the network device may fail to directly communicate with the terminal device. One method for resolving this problem is to use a relay device to assist in communication between the network device and the terminal device. In this case, there are mainly two types of signals associated with the relay device: a non-forwarded signal and a forwarded signal.

The non-forwarded signal is a signal for communication between the relay device and the network device, used for control information exchange, time synchronization, and the like. The forwarded signal is a signal transmitted with assistance of the relay device when the network device communicates with the terminal device. For example, the relay device may receive a signal from the network device, and send the signal to the terminal device. However, when the network device configures to transmit the non-forwarded signal and the forwarded signal simultaneously in a target time period, the relay device may fail to determine a signal to be transmitted, and therefore cannot handle the two types of signals.

### SUMMARY

This application provides a data transmission method and an apparatus. When a network device configures to transmit a non-forwarded signal and a forwarded signal simultaneously in a target time period, a relay device can determine a signal to be transmitted in the target time period, and therefore can handle the two types of signals.

According to a first aspect, a data transmission method is provided. The method may be performed by a relay device, or may be performed by a component (for example, a chip or a circuit) of the relay device. This is not limited. For ease of description, the following uses an example in which the method is performed by the relay device for description.

The method may include: The relay device receives configuration information from a network device, where the configuration information indicates to transmit a first signal and a second signal in a target time period, the first signal is a signal for communication between the relay device and the network device, and the second signal is a signal transmitted with assistance of the relay device. When the first signal and/or the second signal meet/meets a first condition, the relay device transmits the first signal in the target time period; and when the first signal and/or the second signal do/does not meet a first condition, the relay device transmits the second signal in the target time period.

Based on the foregoing technical solution, when the network device configures to transmit the first signal and the second signal in the target time period, the relay device can determine, by determining whether the first signal and/or the second signal meet/meets the first condition, a signal to be transmitted. When the first signal and/or the second signal meet/meets the first condition, the relay device transmits the first signal in the target time period, to preferentially ensure signal interaction between the relay device and the network device, so that the network device can control the relay device or assist in controlling the relay device, and the relay device can preferentially obtain a correct configuration. When the first signal and/or the second signal do/does not meet the first condition, the relay device transmits the second signal in the target time period, so that the relay device preferentially assists in signal transmission between the network device and the terminal device, to ensure communication continuity between the network device and the terminal device. According to this manner, the relay device can correctly handle the first signal and the second signal, to avoid relay performance deterioration resulting from confliction between the first signal and the second signal.

With reference to the first aspect, in some implementations of the first aspect, the first condition is that a priority of the first signal is higher than or equal to a priority of the second signal. The priorities of the first signal and the second signal are classified based on signal types, and there is at least one of the following signal types: a public signal, a data signal, and a control signal.

Based on the foregoing technical solution, the relay device may determine the priorities of the first signal and the second signal based on the signal types (for example, the public signal, the data signal, or the control signal), and can further determine a signal to be transmitted in the target time period, to avoid relay performance deterioration resulting from confliction between the first signal and the second signal.

With reference to the first aspect, in some implementations of the first aspect, that the first signal and/or the second signal meet/meets a first condition includes: The first signal is a public signal; the first signal is a non-public signal, and the second signal is a non-public signal; the first signal is a control signal, and the second signal is a semi-persistently scheduled signal; or the first signal is a semi-persistently scheduled signal, and the second signal is a semi-persistently scheduled signal.

Based on the foregoing technical solution, when the relay device determines that the first signal and/or the second signal meet/meets the first condition, the relay device transmits the first signal in the target time period, so that the signal interaction between the relay device and the network device can be preferentially ensured, the network device can control the relay device or assist in controlling the relay device, and the relay device can preferentially obtain a correct configuration.

With reference to the first aspect, in some implementations of the first aspect, that the first signal and/or the second signal do/does not meet a first condition includes: The second signal is a public signal; the second signal is a control signal, and the first signal is a non-public signal; the second signal is a control signal, and the first signal is a semi-persistently scheduled signal; or the second signal is a semi-persistently scheduled signal, and the first signal is a semi-persistently scheduled signal.

Based on the foregoing technical solution, when the relay device determines that the first signal and/or the second signal do/does not meet the first condition, the relay device transmits the second signal in the target time period, so that the relay device preferentially assists in the signal transmission between the network device and the terminal device, to ensure the communication continuity between the network device and the terminal device.

With reference to the first aspect, in some implementations of the first aspect, that the first signal and/or the second signal meet/meets a first condition includes: The first signal has at least one of the following functions: beam management, power control, connection and disconnection control, timing information, configuration information of the second signal, feedback measurement reporting, scheduling requesting, and time synchronization.

Based on the foregoing technical solution, when the relay device determines that the first signal and/or the second signal meet/meets the first condition, the relay device transmits the first signal in the target time period, so that the signal interaction between the relay device and the network device can be preferentially ensured, the network device can control the relay device or assist in controlling the relay device, and the relay device can preferentially obtain a correct function configuration.

With reference to the first aspect, in some implementations of the first aspect, before determining whether the first signal and/or the second signal meet/meets the first condition, the method further includes: When the first signal and the second signal meet a second condition, the relay device transmits the first signal and the second signal in the target time period.

Based on the foregoing technical solution, when the first signal and the second signal meet the second condition, the relay device may transmit the first signal and the second signal in the target time period, so that signal processing efficiency of the relay device can be improved.

With reference to the first aspect, in some implementations of the first aspect, the second condition is that a difference between power of the first signal and power of the second signal is less than or equal to a first threshold, and/or the second condition is that a difference between a modulation order of the first signal and a modulation order of the second signal is less than or equal to a second threshold.

According to a second aspect, a data transmission apparatus is provided. The apparatus may include: a transceiver unit, configured to receive configuration information from a network device, where the configuration information indicates to transmit a first signal and a second signal in a target time period, the first signal is a signal for communication between the apparatus and the network device, and the second signal is a signal transmitted with assistance of the apparatus; and a processing unit, configured to determine that the first signal and/or the second signal meet/meets a first condition. The transceiver unit is further configured to transmit the first signal in the target time period; and the processing unit is further configured to determine that the first signal and/or the second signal do/does not meet a first condition, and the transceiver unit, further configured to transmit the second signal in the target time period.

Based on the foregoing technical solution, when the network device configures to transmit the first signal and the second signal in the target time period, the relay device can determine, by determining whether the first signal and/or the second signal meet/meets the first condition, a signal to be transmitted. When the first signal and/or the second signal meet/meets the first condition, the relay device transmits the first signal in the target time period, so that signal interaction between the relay device and the network device can be preferentially ensured, the network device can control the relay device or assist in controlling the relay device, and the relay device can preferentially obtain a correct configuration. When the first signal and/or the second signal do/does not meet the first condition, the relay device transmits the second signal in the target time period, so that the relay device preferentially assists in signal transmission between the network device and the terminal device, to ensure communication continuity between the network device and the terminal device. According to this manner, the relay device can correctly handle the first signal and the second signal, to avoid relay performance deterioration resulting from confliction between the first signal and the second signal.

With reference to the second aspect, in some implementations of the second aspect, the first condition is that a priority of the first signal is higher than or equal to a priority of the second signal. The priorities of the first signal and the second signal are classified based on signal types, and there is at least one of the following signal types: a public signal, a data signal, and a control signal.

With reference to the second aspect, in some implementations of the second aspect, that the first signal and/or the second signal meet/meets a first condition includes: The first signal is a public signal; the first signal is a non-public signal, and the second signal is a non-public signal; the first signal is a control signal, and the second signal is a semi-persistently scheduled signal; or the first signal is a semi-persistently scheduled signal, and the second signal is a semi-persistently scheduled signal.

With reference to the second aspect, in some implementations of the second aspect, that the first signal and/or the second signal do/does not meet a first condition includes: The second signal is a public signal; the second signal is a control signal, and the first signal is a non-public signal; the second signal is a control signal, and the first signal is a semi-persistently scheduled signal; or the second signal is a semi-persistently scheduled signal, and the first signal is a semi-persistently scheduled signal.

With reference to the second aspect, in some implementations of the second aspect, that the first signal and/or the second signal meet/meets a first condition includes: The first signal has at least one of the following functions: beam management, power control, connection and disconnection control, timing information, configuration information of the second signal, feedback measurement reporting, scheduling requesting, and time synchronization.

With reference to the second aspect, in some implementations of the second aspect, before whether the first signal and/or the second signal meet/meets the first condition is determined, the processing unit is configured to determine that the first signal and the second signal meet a second condition; and the transceiver unit is configured to transmit the first signal and the second signal in the target time period.

With reference to the second aspect, in some implementations of the second aspect, the second condition is that a difference between power of the first signal and power of the second signal is less than or equal to a first threshold, and/or the second condition is that a difference between a modulation order of the first signal and a modulation order of the second signal is less than or equal to a second threshold.

According to a third aspect, a communication apparatus is provided. The apparatus is configured to perform the method in the possible implementations of the first aspect. Specifically, the apparatus may include units and/or modules, for example, a processing unit and/or a communication unit, configured to perform the method in any one of the possible implementations of the first aspect.

In an implementation, the apparatus is a relay device. When the apparatus is a relay device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a relay device. When the apparatus is a chip, a chip system, or a circuit used in a relay device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, a communication apparatus is provided. The apparatus includes at least one processor, configured to execute a computer program or instructions stored in a storage, to perform the method in any one of the possible implementations of the first aspect. Optionally, the apparatus further includes the storage, configured to store the computer program or the instructions. Optionally, the apparatus further includes a communication interface, and the processor reads, through the communication interface, the computer program or the instructions stored in the storage.

In an implementation, the apparatus is a relay device.

In another implementation, the apparatus is a chip, a chip system, or a circuit used in a relay device.

According to a fifth aspect, this application provides a processor, configured to perform the method in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a sixth aspect, a computer-readable storage medium is provided. The computer-readable medium stores program code to be executed by a device, and the program code includes the method in the possible implementations of the first aspect.

According to a seventh aspect, a computer program product including instructions is provided. When the computer program product runs on a computer, the computer is enabled to perform the method in the possible implementations of the first aspect.

According to an eighth aspect, this application further provides a system. The system includes a relay device, and the relay device may be configured to perform the steps performed by the relay device in the first aspect.

In some possible implementations, the system may further include another device that interacts with the relay device in the solution provided in this embodiment of this application, and the like.

### BRIEF DESCRIPTION OF DRAWINGS

FIG. 1 shows a diagram of a communication system 100 applicable to an embodiment of this application;
FIG. 2 shows a schematic flowchart of a data transmission method 200 applicable to an embodiment of this application;
FIG. 3 shows a diagram of a data transmission method 300 according to an embodiment of this application;
FIG. 4 shows a diagram of a data transmission manner according to an embodiment of this application;
FIG. 5 shows a diagram of another data transmission manner according to an embodiment of this application;
FIG. 6 shows a diagram of another data transmission manner according to an embodiment of this application;
FIG. 7 shows a diagram of another data transmission manner according to an embodiment of this application;
FIG. 8 shows a diagram of another data transmission manner according to an embodiment of this application;
FIG. 9 shows a diagram of another data transmission manner according to an embodiment of this application;
FIG. 10 shows a diagram of another data transmission manner according to an embodiment of this application;
FIG. 11 shows a diagram of another data transmission manner according to an embodiment of this application;
FIG. 12 shows a block diagram of a communication apparatus 1200 according to an embodiment of this application;
FIG. 13 shows a block diagram of another communication apparatus 1300 according to an embodiment of this application; and
FIG. 14 shows a diagram of a chip system 1400 according to an embodiment of this application.

### DESCRIPTION OF EMBODIMENTS

The following describes technical solutions of embodiments in this application with reference to accompanying drawings.

The technical solutions in embodiments of this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, or the like. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A terminal device in embodiments of this application may be a device that provides a user with voice/data, for example, a handheld device or vehicle-mounted device having a wireless connection function. Currently, some examples of the terminal may be: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote surgery (remote surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device or wearable device connected to a wireless modem, a terminal device in a 5G network, or a terminal device in a future evolved public land mobile network (public land mobile network, PLMN). This is not limited in embodiments of this application.

By way of example rather than limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, intelligent wearable devices include full-featured and large-size devices that can implement complete or partial functions without depending on smartphones, for example, smart watches or smart glasses, and devices that dedicated to only one type of application and need to be used together with other devices such as smartphones, such as various smart bands or smart jewelry used for monitoring physical signs.

In addition, the terminal device in embodiments of this application may alternatively be a terminal device in an IoT system. IoT is an important part of future development of information technologies. A main technical feature of IoT is connecting things to networks by using communication technologies, to implement an intelligent network for interconnection between persons and machines or between things.

In this embodiment of this application, an apparatus configured to implement functions of the terminal device may be a terminal device, or may be an apparatus, for example, a chip system or a chip, that can support the terminal device in implementing the functions. The apparatus may be installed in the terminal device. In this embodiment of this application, the chip system may include a chip, or may include a chip and another discrete component.

A relay device in embodiments of this application may be a terminal device. For a specific example, refer to the foregoing description of the terminal device. Details are not described herein again.

A network device in embodiments of this application may be a device configured to communicate with the terminal device. The network device may be a base transceiver station (base transceiver station, BTS) in a global system for mobile communications (global system for mobile communications, GSM) or code division multiple access (code division multiple access, CDMA), may be a NodeB (NodeB, NB) in a wideband code division multiple access (wideband code division multiple access, WCDMA) system, may be an evolved NodeB (evolved NodeB, eNB, or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network or a network device in a future evolved PLMN network, or one or a group of antenna panels (including a plurality of antenna panels) of a base station in a 5G system. Alternatively, the network device may be a network node that constitutes a gNB or a transmission point, for example, a baseband unit (baseband unit, BBU) or a distributed unit (distributed unit, DU). This is not limited in embodiments of this application.

In some deployments, a gNB may include a central unit (central unit, CU) and a DU. The gNB may further include an active antenna unit (active antenna unit, AAU). The CU implements a part of functions of the gNB, and the DU implements a part of functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements a part of physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

The relay device in embodiments of this application may be a terminal device. For a specific example, refer to the foregoing enumeration of the terminal device. Details are not described herein again.

Direct communication between the network device and the terminal device may be affected by many factors. For example, when the network device and the terminal device are far away from each other, the network device may fail to directly communicate with the terminal device. One method for resolving this problem is to use a relay device to assist in communication between the network device and the terminal device. In this case, there are mainly two types of signals associated with the relay device: a non-forwarded signal and a forwarded signal.

The non-forwarded signal is a signal for communication between the relay device and the network device, in other words, a signal whose source address or destination address is the relay device. For example, the relay device generates a signal, and sends the signal to the network device. In this case, the signal may be referred to as a non-forwarded signal. For another example, the network device generates a signal, and sends the signal to the relay device for use. In this case, the signal may be referred to as a non-forwarded signal.

The forwarded signal is a signal that is transmitted with assistance of the relay device when the network device communicates with the terminal device, in other words, a signal whose source address or destination address is not the relay device. For example, the network device generates a signal, and sends the signal to the relay device, and the relay device forwards the signal to the terminal device. In this case, the signal may be referred to as a forwarded signal. For another example, the terminal device generates a signal, and sends the signal to the relay device, and the relay device forwards the signal to the network device. In this case, the signal may be referred to as a forwarded signal.

In the following embodiments, it is assumed that the non-forwarded signal is a first signal, where the first signal includes at least one of the following: a non-forwarded signal (denoted as signal #1) received by the relay device from the network device, and a non-forwarded signal (denoted as signal #2) sent by the relay device to the network device; and it is assumed that the forwarded signal is a second signal, where the second signal includes a signal (denoted as signal #3) forwarded by the relay device to the terminal device (or a next-hop relay device), and a signal (denoted as signal #4) forwarded by the relay device to the network device (or a previous-hop relay device).

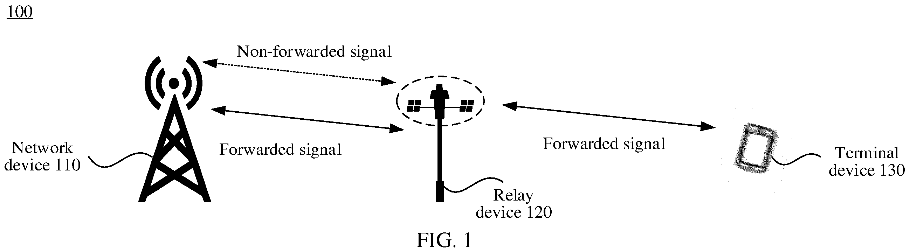

FIG. 1 shows a diagram of a communication system 100 applicable to an embodiment of this application. As shown in FIG. 1, the communication system 100 includes a network device 110, a relay device 120, and a terminal device 130. There may be one or more terminal devices 130, and there may be one or more relay devices 120.

When the network device 110 and the terminal device 130 are far away from each other, the network device and the terminal device cannot directly communicate with each other. In this case, the relay device 120 may be used to provide a relay service for the terminal device 130 and the network device 110, to assist in communication between the network device 110 and the terminal device 130. The relay device 120 may have two antenna panels, where one is used to communicate with the network device, and the other is used to communicate with the terminal device. For example, when the network device 110 sends signal #3 to the terminal device 130, the relay device 120 may receive signal #3 by using the antenna panel communicating with the network device 110, amplify signal #3, and then send signal #3 to the terminal device 130 by using the antenna panel communicating with the terminal device 130. For another example, when the terminal device 130 sends signal #4 to the network device 110, the relay device 120 may receive signal #4 by using the antenna panel communicating with the terminal device 130, amplify signal #4, and then send signal #4 to the network device 110 by using the antenna panel communicating with the network device 110.

To better utilize the relay device 120 to provide a relay service for the terminal device 130 and the network device 110, the relay device 120 is typically configured with a controller, and the controller is configured for signal interaction between the relay device 120 and the network device 110. For example, the network device 110 may send signal #1 to the controller in the relay device 120. Signal #1 may be related to any one or more of the following: beam management, power control, connection and disconnection control, timing information, or configuration information of the second signal. Correspondingly, the controller in the relay device 120 may receive signal #1. For another example, the controller in the relay device 120 may send signal #2 to the network device 110, and correspondingly, the network device 110 may receive signal #2.

It should be noted that the communication system 100 shown in FIG. 1 is merely intended to describe the technical solutions of this application more clearly, and does not constitute any limitation on this application. A person of ordinary skill in the art may know that, with evolution of a network architecture and emergence of new service scenarios, the technical solutions provided in this application are also applicable to similar technical problems. For example, the communication system 100 shown in FIG. 1 is also applicable to a multi-hop relay communication scenario. In this scenario, the network device 110 may be a previous-level relay device, and the terminal device 130 may be a next-level relay device.

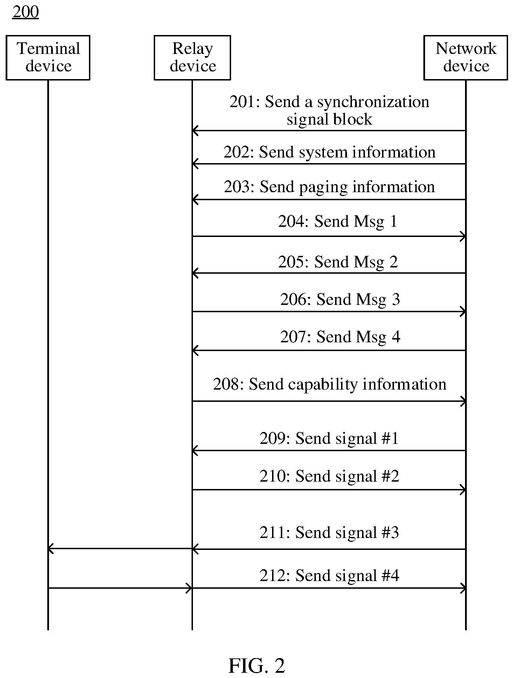

FIG. 2 shows a schematic flowchart of a data transmission method 200 applicable to an embodiment of this application. The method 200 may include the following steps.

201: A network device sends a synchronization signal block to a relay device.

For example, the network device periodically sends a synchronization signal to the relay device. Correspondingly, the relay device may receive the synchronization signal block from the network device. The synchronization signal may be a synchronization/broadcast signal block (synchronization signal/physical broadcast channel block, SSB), or may be referred to as a synchronization signal block. A physical broadcast channel (physical broadcast channel, PBCH) carries a master information block (master information block, MIB). The MIB may indicate a search space of a system information block 1 (system information block 1, SIB 1), to be specific, time and a frequency location at which a physical downlink control channel (physical downlink control channel, PDCCH) corresponding to the SIB 1 may be sent.

202: The network device sends system information to the relay device.

For example, the network device sends broadcast system information to the relay device, where a signal carrying the system information is referred to as a system information block (system information block, SIB). For example, the SIB includes the SIB 1, and the SIB 1 may be used to carry information such as a random access response signal such as a message 2 (message 2, Msg 2) and a downlink signal such as a message 4 (message 4, Msg 4). Correspondingly, the relay device may receive the system information from the network device.

203: The network device sends paging information to the relay device.

For example, the network device periodically sends the paging information in a paging time window. Correspondingly, a terminal device or a relay device in an idle state may periodically monitor the paging information. In other words, the terminal device or the relay device in the idle state may periodically search for a PDCCH corresponding to the paging information. The PDCCH corresponding to the paging information may be scrambled by using a paging radio network temporary identifier (paging radio network temporary identifier, P-RNTI).

204: The relay device sends Msg 1 to the network device.

For example, the relay device may determine, based on configuration information of a physical random access channel (physical random access channel, PRACH) and the SSB received from the network device, a random access resource associated with the SSB. The random access resource may include a time resource, a frequency resource, and a code rate resource. The relay device may send a random access preamble signal, for example, the message 1 (message 1, Msg 1), to the network device by using the random access resource. Correspondingly, the network device may receive the random access preamble signal (for example, Msg 1).

205: The network device sends Msg 2 to the relay device.

For example, after receiving the random access preamble signal (for example, Msg 1) from the relay device, the network device may estimate a timing advance of the relay device, and send a random access response signal (for example, Msg 2) to the relay device. The random access response signal (for example, Msg 2) includes configuration information such as a time-frequency resource location at which the relay device sends an uplink signal, for example, a message 3 (message 3, Msg 3), and a modulation and encoding scheme. Correspondingly, the relay device may receive the random access response signal (for example, Msg 2).

206: The relay device sends Msg 3 to the network device.

For example, after the relay device receives the random access response signal (for example, Msg 2) from the network device, the relay device sends the uplink signal (for example, Msg 3) to the network device at the time-frequency resource location based on the time-frequency resource location at which the relay device sends the uplink signal (for example, Msg 3) and that is included in the random access response signal (for example, Msg 2). Correspondingly, the network device may receive the uplink signal (for example, Msg 3).

207: The network device sends Msg 4 to the relay device.

For example, after receiving the uplink signal (for example, Msg 3) from the relay device, the network device sends a downlink signal (for example, Msg 4) to the relay device. The downlink signal (for example, Msg 4) indicates that the relay device successfully accesses the network device. Correspondingly, the relay device may receive the downlink signal (for example, Msg 4), so that the relay device can communicate with the network device based on indication information of the downlink signal (for example, Msg 4).

208: The relay device sends capability information to the network device.

When the relay device transmits a first signal and a second signal simultaneously, the capability information may correspond to any one or more of the following: (1) The relay device receives signal #1, and does not send signal #3 or signal #4. (2) The relay device sends signal #2, and does not send signal #3 or signal #4. (3) The relay device sends signal #3, and does not receive signal #1 or send signal #2. (4) The relay device sends signal #4, and does not receive signal #1 or send signal #2. (5) The relay device receives signal #1 and sends signal #3 simultaneously. (6) The relay device receives signal #1 and sends signal #4 simultaneously. (7) The relay device sends signal #2 and signal #3 simultaneously. (8) The relay device sends signal #2 and signal #4 simultaneously.

209: The network device sends signal #1 to the relay device.

Signal #1 may be related to any one or more of the following: beam management, power control, connection and disconnection control, timing information, or configuration information of the second signal, so that the network device can control the relay device or assist in controlling the relay device.

Signal #1 may be any one of the following: a public signal, a PDCCH, a physical downlink shared channel (physical downlink shared channel, PDSCH), a channel state information-reference signal (channel state information-reference signal, CSI-RS), a tracking reference signal (tracking reference signal, TRS), or another reference signal. The public signal may be any one of the following: an SSB, system information, paging information, a random access response signal (for example, Msg 2), a downlink signal (for example, Msg 4), or another public signal.

210: The relay device sends signal #2 to the network device.

Signal #2 may be related to any one or more of the following: feedback measurement reporting, scheduling requesting, or time synchronization, so that the network device can control the relay device or assist in controlling the relay device.

Signal #2 may be any one of the following: a public signal, a sounding reference signal (sounding reference signal, SRS), a physical uplink control channel (physical uplink control channel, PUCCH), a physical uplink shared channel (physical uplink shared channel, PUSCH), or another reference signal. The public signal may be any one of the following: a PRACH, a random access preamble signal (for example, Msg 1), an uplink signal (for example, Msg 3), or another public signal.

211: The network device sends signal #3 to the relay device.

Correspondingly, the relay device receives signal #3, and sends signal #3 to the terminal device (or a next-hop relay device).

Signal #3 may be any one of the following: a public signal, a PDCCH, a PDSCH, a CSI-RS, a TRS, or another reference signal. The public signal may be any one of the following: an SSB, system information, paging information, a random access response signal (for example, Msg 2), a downlink signal (for example, Msg 4), or another public signal.

212: The relay device sends signal #4 to the network device.

Correspondingly, the relay device receives signal #4 from the terminal device, and sends signal #4 to the network device (or a previous-hop relay device).

Signal #4 may be any one of the following: a public signal, an SRS, a PUCCH, a PUSCH, or another reference signal. The public signal may be any one of the following: a PRACH, a random access preamble signal (for example, Msg 1), an uplink signal (for example, Msg 3), or another public signal.

It should be understood that a sequence of performing step 201 to step 212 is not limited in this embodiment of this application, and one or more of step 201 to step 212 may be performed. This is not limited in this embodiment of this application.

Based on the method 200, the first signal (for example, signal #1 or signal #2) may be a signal for communication between the relay device and the network device, and the second signal (for example, signal #3 or signal #4) may be a signal transmitted with assistance of the relay device when the network device communicates with the terminal device. When the network device configures the first signal and the second signal to occur simultaneously, for example, step 209 and step 211 are performed simultaneously, to be specific, the relay device receives signal #1 and sends signal #3 simultaneously, for another example, step 210 and step 212 are performed simultaneously, to be specific, the relay device sends signal #2 and sends signal #4 simultaneously, the relay device may fail to determine a signal to be transmitted, and therefore cannot correctly handle the two signals, causing relay performance deterioration, and affecting normal running of a network.

In view of the foregoing technical problem, this application provides a data transmission method. According to the method, in this application, when the network device configures the first signal and the second signal to occur simultaneously, the relay device can correctly handle the first signal and the second signal. In other words, when the first signal and the second signal occur simultaneously, the relay device may choose to transmit the first signal (for example, the relay device receives signal #1, for another example, the relay device sends signal #2), or may choose to transmit the second signal (for example, the relay device sends signal #3, for another example, the relay device sends signal #4), or may choose to transmit the first signal and the second signal simultaneously (for example, the relay device receives signal #1 and sends signal #3 simultaneously).

The following describes the data transmission method provided in embodiments of this application.

In the following embodiments, a function of the first signal (for example, signal #1, or signal #2) and a function of the second signal (for example, signal #3, or signal #4) are mentioned for a plurality of times. It should be understood that a function of a signal is a function corresponding to information carried in the signal. For example, a function of signal #1 is a function corresponding to information carried in signal #1. For another example, a function of signal #2 is a function corresponding to information carried in signal #2.

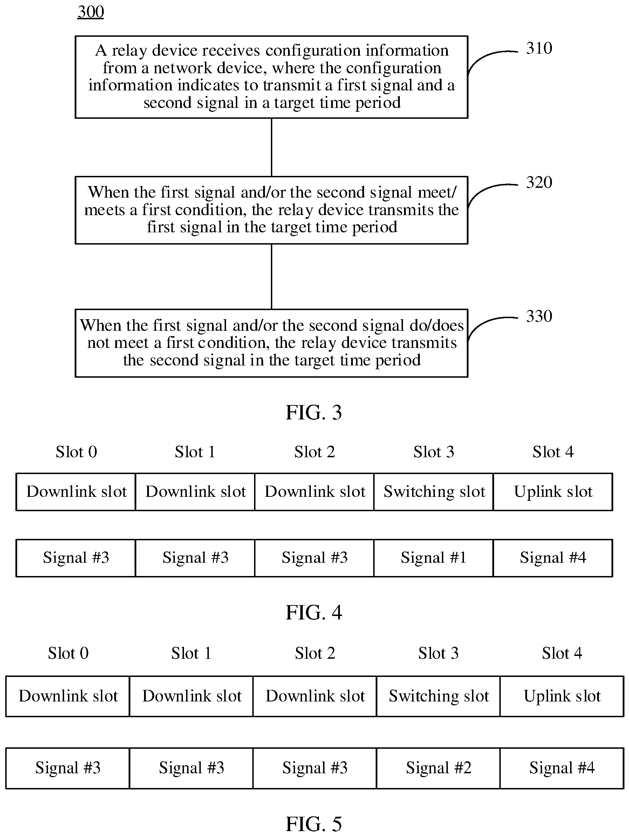

FIG. 3 shows a diagram of a data transmission method 300 according to an embodiment of this application. As shown in FIG. 3, the method 300 may include the following steps.

310: A relay device receives configuration information from a network device, where the configuration information indicates to transmit a first signal and a second signal in a target time period.

The first signal is a signal for communication between the relay device and the network device (that is, a non-forwarded signal), and the second signal is a signal transmitted with assistance of the relay device (that is, a forwarded signal).

The configuration information may be carried in any one of the following: a PBCH, system information (for example, a SIB 1), a media access control-control element (media access control-control element, MAC-CE), downlink control information (downlink control information, DCI), or radio resource control (radio resource control, RRC).

The target time period may be a specific moment, or may be a time interval. A time unit of the target time period is not limited. For example, the target time period may be one or more subframes. For another example, the target time period may be one or more slots. For another example, the target time period may be one or more orthogonal frequency division multiplexing (orthogonal frequency division multiplexing, OFDM) symbols. This is not limited in this embodiment of this application.

It should be understood that, when the first signal and the second signal are transmitted in the target time period, the first signal and the second signal occur simultaneously. For example, the first signal and the second signal occur simultaneously at a specific moment. For another example, the first signal and the second signal occur simultaneously at a time interval.

It is assumed that the first signal includes signal #1 and signal #2, and the second signal includes signal #3 and signal #4. That the network device indicates the relay device to transmit the first signal and the second signal in the target time period may include: The network device indicates the relay device to receive signal #1 and send signal #3 in the target time period; the network device indicates the relay device to send signal #2 and send signal #4 in the target time period; the network device indicates the relay device to receive signal #1 and send signal #4 in the target time period; or the network device indicates the relay device to send signal #2 and signal #3 in the target time period.

When the relay device is configured to transmit the first signal and the second signal in the target time period, the relay device may determine, according to step 320 and step 330, a signal to be transmitted, and then correctly handle the first signal and the second signal.

320: When the first signal and/or the second signal meet/meets a first condition, the relay device transmits the first signal in the target time period.

330: When the first signal and/or the second signal do/does not meet a first condition, the relay device transmits the second signal in the target time period.

The first signal and/or the second signal meet/meets the first condition, to be specific, a priority of the first signal is higher than or equal to a priority of the second signal. The first signal and/or the second signal do/does not meet the first condition, to be specific, a priority of the second signal is higher than a priority of the first signal.

Optionally, the priorities of the first signal and the second signal are classified based on signal types, and there is at least one of the following signal types: a public signal, a data signal, and a control signal.

An example in which the first signal includes signal #1 and signal #2, and the second signal includes signal #3 and signal #4 is used below for description with reference to several cases. Signal #1 represents a non-forwarded signal sent by the network device to the relay device, signal #2 represents a non-forwarded signal sent by the relay device to the network device, signal #3 represents a signal forwarded by the relay device to the terminal device (in other words, the network device sends the signal to the relay device, and the relay device forwards the signal to the terminal device), and signal #4 represents a signal forwarded by the relay device to the network device (in other words, the terminal device sends the signal to the relay device, and the relay device forwards the signal to the network device).

Case #A: When signal #1 and/or signal #3 meet/meets the first condition, the relay device receives signal #1 in the target time period.

The first condition may be that a priority of signal #1 is higher than or equal to a priority of signal #3.

For example, the relay device does not send signal #3 in the target time period.

Optionally, the priorities of signal #1 and signal #3 are classified based on signal types, where there is at least one of the following signal types: a public signal, a data signal, and a control signal.

The public signal may be any one of the following: an SSB, system information, paging information, a random access response signal (for example, Msg 2), a downlink signal (for example, Msg 4), or another public signal. The data signal may be a signal for data information transmission. For example, the data signal may be a PDSCH or another data signal. The control signal may be a signal for control information transmission. For example, the control signal may be any one of the following: a PDCCH, a CSI-RS, a TRS, or another control signal.

In a possible manner, when signal #1 is a public signal, the priority of signal #1 is higher than or equal to the priority of signal #3, and the relay device receives signal #1 in the target time period.

For example, signal #1 is a public signal, and signal #3 is a public signal. For example, signal #1 may be any one of the following: an SSB, system information, paging information, a random access response signal (for example, Msg 2), a downlink signal (for example, Msg 4), or another public signal. Signal #3 may be any one of the following: an SSB, system information, paging information, a random access response signal (for example, Msg 2), a downlink signal (for example, Msg 4), or another public signal.

For example, signal #1 is a public signal, and signal #3 is a data signal. For example, signal #1 may be any one of the following: an SSB, system information, paging information, a random access response signal (for example, Msg 2), a downlink signal (for example, Msg 4), or another public signal. Signal #3 may be a PDSCH or another data signal.

For example, signal #1 is a public signal, and signal #3 is a control signal. For example, signal #1 may be any one of the following: an SSB, system information, paging information, a random access response signal (for example, Msg 2), a downlink signal (for example, Msg 4), or another public signal. Signal #3 may be any one of the following: a PDCCH, a CSI-RS, a TRS, or another control signal.

In another possible manner, when signal #1 is a non-public signal, and signal #3 is a non-public signal, the priority of signal #1 is higher than or equal to the priority of signal #3, and the relay device receives signal #1 in the target time period.

For example, signal #1 is a control signal, and signal #3 is a control signal. For example, signal #1 may be any one of the following: a PDCCH, a CSI-RS, a TRS, or another control signal. Signal #3 may be any one of the following: a PDCCH, a CSI-RS, a TRS, or another control signal.

For example, signal #1 is a control signal, and signal #3 is a data signal. For example, signal #1 may be any one of the following: a PDCCH, a CSI-RS, a TRS, or another control signal. Signal #3 may be a PDSCH or another data signal.

For example, signal #1 is a data signal, and signal #3 is a control signal. For example, signal #1 may be a PDSCH or another data signal. Signal #3 may be any one of the following: a PDCCH, a CSI-RS, a TRS, or another control signal.

For example, signal #1 is a data signal, and signal #3 is a data signal. For example, signal #1 may be a PDSCH or another data signal. Signal #3 may be a PDSCH or another data signal.

In another possible manner, when signal #1 is a control signal, and signal #3 is a semi-persistently scheduled signal, the priority of signal #1 is higher than or equal to the priority of signal #3, and the relay device receives signal #1 in the target time period.

For example, signal #1 may be any one of the following: a PDCCH, a CSI-RS, a TRS, or another control signal. Signal #3 may be a semi-persistently scheduled PDCCH, a semi-persistently scheduled CSI-RS, a semi-persistently scheduled TRS, or another semi-persistently scheduled signal.

In another possible manner, when signal #1 is a semi-persistently scheduled signal, and signal #3 is a semi-persistently scheduled signal, the priority of signal #1 is higher than or equal to the priority of signal #3, and the relay device receives signal #1 in the target time period.

For example, signal #1 may be a semi-persistently scheduled PDCCH, a semi-persistently scheduled CSI-RS, a semi-persistently scheduled TRS, or another semi-persistently scheduled signal. Signal #3 may be a semi-persistently scheduled PDCCH, a semi-persistently scheduled CSI-RS, a semi-persistently scheduled TRS, or another semi-persistently scheduled signal.

Optionally, the priorities of signal #1 and signal #3 are classified based on functions of signals. When a function of signal #1 meets the first condition, the relay device receives signal #1 in the target time period.

That the function of signal #1 meets the first condition may include: The function of signal #1 may be at least one of the following: beam management, power control, connection and disconnection control, timing information, or configuration information of the second signal.

According to Case #A, when the network device configures to transmit signal #1 and signal #3 in the target time period, the relay device may determine, by determining whether signal #1 and/or signal #3 meet/meets the first condition (the priority of signal #1 is higher than or equal to the priority of signal #3), whether to receive signal #1 in the target time period. When the relay device determines that signal #1 and/or signal #3 meet/meets the first condition, the relay device receives signal #1 in the target time period, so that signal interaction between the relay device and the network device can be preferentially ensured, the network device can control the relay device or assist in controlling the relay device, and the relay device can preferentially obtain a correct configuration.

Case #B: When signal #2 and/or signal #4 meet/meets the first condition, the relay device sends signal #2 in the target time period.

The first condition may be that a priority of signal #2 is higher than or equal to a priority of signal #4.

For example, the relay device does not send signal #4 in the target time period.

Optionally, the priorities of signal #2 and signal #4 are classified based on signal types, where there is at least one of the following signal types: a public signal, a data signal, and a control signal.

The public signal may be any one of the following: a PRACH, a random access preamble signal (for example, Msg 1), an uplink signal (for example, Msg 3), or another public signal. The data signal may be a signal for data information transmission. For example, the data signal may be a PUSCH or another data signal. The control signal may be a signal for control information transmission. For example, the control signal may be any one of the following: a PUCCH, an SRS, or another control signal.

In a possible manner, when signal #2 is a public signal, the priority of signal #2 is higher than or equal to the priority of signal #4, and the relay device sends signal #2 in the target time period.

For example, signal #2 is a public signal, and signal #4 is a public signal. For example, signal #2 may be any one of the following: a PRACH, a random access preamble signal (for example, Msg 1), an uplink signal (for example, Msg 3), or another public signal. Signal #4 may be any one of the following: a PRACH, a random access preamble signal (for example, Msg 1), an uplink signal (for example, Msg 3), or another public signal.

For example, signal #2 is a public signal, and signal #4 is a data signal. For example, signal #2 may be any one of the following: a PRACH, a random access preamble signal (for example, Msg 1), an uplink signal (for example, Msg 3), or another public signal. Signal #4 may be a PUSCH or another data signal.

For example, signal #2 is a public signal, and signal #4 is a control signal. For example, signal #2 may be any one of the following: a PRACH, a random access preamble signal (for example, Msg 1), an uplink signal (for example, Msg 3), or another public signal. Signal #4 may be any one of the following: a PUCCH, an SRS, or another control signal.

In another possible manner, when signal #2 is a non-public signal, and signal #4 is a non-public signal, the priority of signal #2 is higher than or equal to the priority of signal #4, and the relay device sends signal #2 in the target time period.

For example, signal #2 is a control signal, and signal #4 is a control signal. For example, signal #2 may be any one of the following: a PUCCH, an SRS, or another control signal. Signal #4 may be any one of the following: a PUCCH, an SRS, or another control signal.

For example, signal #2 is a control signal, and signal #4 is a data signal. For example, signal #2 may be any one of the following: a PUCCH, an SRS, or another control signal. Signal #4 may be a PUSCH or another data signal.

For example, signal #2 is a data signal, and signal #4 is a control signal. For example, signal #2 may be a PUSCH or another data signal. Signal #4 may be any one of the following: a PUCCH, an SRS, or another control signal.

For example, signal #2 is a data signal, and signal #4 is a data signal. For example, signal #2 may be a PUSCH or another data signal. Signal #4 may be a PUSCH or another data signal.

In another possible manner, when signal #2 is a control signal, and signal #4 is a semi-persistently scheduled signal, the priority of signal #2 is higher than or equal to the priority of signal #4, and the relay device sends signal #2 in the target time period.

For example, signal #2 may be any one of the following: a PUCCH, an SRS, or another control signal. Signal #4 may be a semi-persistently scheduled PUCCH, a semi-persistently scheduled SRS, or another semi-persistently scheduled signal.

In another possible manner, when signal #2 is a semi-persistently scheduled signal, and signal #4 is a semi-persistently scheduled signal, the priority of signal #2 is higher than or equal to the priority of signal #4, and the relay device sends signal #2 in the target time period.

For example, signal #2 may be a semi-persistently scheduled PUCCH, a semi-persistently scheduled SRS, or another semi-persistently scheduled signal. Signal #4 may be a semi-persistently scheduled PUCCH, a semi-persistently scheduled SRS, or another semi-persistently scheduled signal.

Optionally, the priorities of signal #2 and signal #4 are classified based on functions of signals. When a function of signal #2 meets the first condition, the relay device sends signal #2 in the target time period.

That the function of signal #2 meets the first condition may include: The function of signal #2 may be at least one of the following: feedback measurement reporting, scheduling requesting, and time synchronization.

According to Case #B, when the network device configures to transmit signal #2 and signal #4 in the target time period, the relay device may determine, by determining whether signal #2 and/or signal #4 meet/meets the first condition (the priority of signal #2 is higher than or equal to the priority of signal #4), whether to send signal #2 in the target time period. When the relay device determines that signal #2 and/or signal #4 meet/meets the first condition, the relay device sends signal #2 in the target time period, so that signal interaction between the relay device and the network device can be preferentially ensured, the network device can control the relay device or assist in controlling the relay device, and the relay device can preferentially obtain a correct configuration.

Case #C: When signal #1 and/or signal #4 meet/meets the first condition, the relay device receives signal #1 in the target time period.

The first condition may be that a priority of signal #1 is higher than or equal to a priority of signal #4.

For example, the relay device does not send signal #4 in the target time period.

Optionally, the priorities of signal #1 and signal #4 are classified based on signal types, where there is at least one of the following signal types: a public signal, a data signal, and a control signal.

The public signal may be any one of the following: an SSB, system information, paging information, a random access response signal (for example, Msg 2), a downlink signal (for example, Msg 4), a PRACH, a random access preamble signal (for example, Msg 1), an uplink signal (for example, Msg 3), or another public signal. The data signal may be a signal for data information transmission. For example, the data signal may be any one of the following: a PDSCH, a PUSCH, or another data signal. The control signal may be a signal for control information transmission. For example, the control signal may be any one of the following: a PDCCH, a CSI-RS, a TRS, a PUCCH, an SRS, or another control signal.

In a possible manner, when signal #1 is a public signal, the priority of signal #1 is higher than or equal to the priority of signal #4, and the relay device receives signal #1 in the target time period.

For example, signal #1 is a public signal, and signal #4 is a public signal. For example, signal #1 may be any one of the following: an SSB, system information, paging information, a random access response signal (for example, Msg 2), a downlink signal (for example, Msg 4), or another public signal. Signal #4 may be any one of the following: a PRACH, a random access preamble signal (for example, Msg 1), an uplink signal (for example, Msg 3), or another public signal.

For example, signal #1 is a public signal, and signal #4 is a data signal. For example, signal #1 may be any one of the following: an SSB, system information, paging information, a random access response signal (for example, Msg 2), a downlink signal (for example, Msg 4), or another public signal. Signal #4 may be a PUSCH or another data signal.

For example, signal #1 is a public signal, and signal #4 is a control signal. For example, signal #1 may be any one of the following: an SSB, system information, paging information, a random access response signal (for example, Msg 2), a downlink signal (for example, Msg 4), or another public signal. Signal #4 may be any one of the following: a PUCCH, an SRS, or another control signal.

In another possible manner, when signal #1 is a non-public signal, and signal #4 is a non-public signal, the priority of signal #1 is higher than or equal to the priority of signal #4, and the relay device receives signal #1 in the target time period.

For example, signal #1 is a control signal, and signal #4 is a control signal. For example, signal #1 may be any one of the following: a PDCCH, a CSI-RS, a TRS, or another control signal. Signal #4 may be any one of the following: a PUCCH, an SRS, or another control signal.

For example, signal #1 is a control signal, and signal #4 is a data signal. For example, signal #1 may be any one of the following: a PDCCH, a CSI-RS, a TRS, or another control signal. Signal #4 may be a PUSCH or another data signal.

For example, signal #1 is a data signal, and signal #4 is a control signal. For example, signal #1 may be a PDSCH or another data signal. Signal #4 may be any one of the following: a PUCCH, an SRS, or another control signal.

For example, signal #1 is a data signal, and signal #4 is a data signal. For example, signal #1 may be a PDSCH or another data signal. Signal #4 may be a PUSCH or another data signal.

In another possible manner, when signal #1 is a control signal, and signal #4 is a semi-persistently scheduled signal, the priority of signal #1 is higher than or equal to the priority of signal #4, and the relay device receives signal #1 in the target time period.

For example, signal #1 may be any one of the following: a PDCCH, a CSI-RS, a TRS, or another control signal. Signal #4 may be a semi-persistently scheduled PUCCH, a semi-persistently scheduled SRS, or another semi-persistently scheduled signal.

In another possible manner, when signal #1 is a semi-persistently scheduled signal, and signal #4 is a semi-persistently scheduled signal, the priority of signal #1 is higher than or equal to the priority of signal #4, and the relay device receives signal #1 in the target time period.

For example, signal #1 may be a semi-persistently scheduled PDCCH, a semi-persistently scheduled CSI-RS, a semi-persistently scheduled TRS, or another semi-persistently scheduled signal. Signal #4 may be a semi-persistently scheduled PUCCH, a semi-persistently scheduled SRS, or another semi-persistently scheduled signal.

Optionally, the priorities of signal #1 and signal #4 are classified based on functions of signals. When a function of signal #1 meets the first condition, the relay device receives signal #1 in the target time period.

That the function of signal #1 meets the first condition may include: The function of signal #1 may be at least one of the following: beam management, power control, connection and disconnection control, timing information, or configuration information of the second signal.

According to Case #C, when the network device configures to transmit signal #1 and signal #4 in the target time period, the relay device may determine, by determining whether signal #1 and/or signal #4 meet/meets the first condition (the priority of signal #1 is higher than or equal to the priority of signal #4), whether to receive signal #1 in the target time period. When the relay device determines that signal #1 and/or signal #4 meet/meets the first condition, the relay device receives signal #1 in the target time period, so that signal interaction between the relay device and the network device can be preferentially ensured, the network device can control the relay device or assist in controlling the relay device, and the relay device can preferentially obtain a correct configuration.

Case #D: When signal #2 and/or signal #3 meet/meets the first condition, the relay device sends signal #2 in the target time period.

The first condition may be that a priority of signal #2 is higher than or equal to a priority of signal #3.

For example, the relay device does not send signal #3 in the target time period.

Optionally, the priorities of signal #2 and signal #3 are classified based on signal types, where there is at least one of the following signal types: a public signal, a data signal, and a control signal.

The public signal may be any one of the following: an SSB, system information, paging information, a random access response signal (for example, Msg 2), a downlink signal (for example, Msg 4), a PRACH, a random access preamble signal (for example, Msg 1), an uplink signal (for example, Msg 3), or another public signal. The data signal may be a signal for data information transmission. For example, the data signal may be any one of the following: a PDSCH, a PUSCH, or another data signal. The control signal may be a signal for control information transmission. For example, the control signal may be any one of the following: a PDCCH, a CSI-RS, a TRS, a PUCCH, an SRS, or another control signal.

In a possible manner, when signal #2 is a public signal, the priority of signal #2 is higher than or equal to the priority of signal #3, and the relay device sends signal #2 in the target time period.

For example, signal #2 is a public signal, and signal #3 is a public signal. For example, signal #2 may be any one of the following: a PRACH, a random access preamble signal (for example, Msg 1), an uplink signal (for example, Msg 3), or another public signal. Signal #3 may be any one of the following: an SSB, system information, paging information, a random access response signal (for example, Msg 2), a downlink signal (for example, Msg 4), or another public signal.

For example, signal #2 is a public signal, and signal #3 is a data signal. For example, signal #2 may be any one of the following: a PRACH, a random access preamble signal (for example, Msg 1), an uplink signal (for example, Msg 3), or another public signal. Signal #3 may be a PDSCH or another data signal.

For example, signal #2 is a public signal, and signal #3 is a control signal. For example, signal #2 may be any one of the following: a PRACH, a random access preamble signal (for example, Msg 1), an uplink signal (for example, Msg 3), or another public signal. Signal #3 may be any one of the following: a PDCCH, a CSI-RS, a TRS, or another control signal.

In another possible manner, when signal #2 is a non-public signal, and signal #3 is a non-public signal, the priority of signal #2 is higher than or equal to the priority of signal #3, and the relay device sends signal #2 in the target time period.

For example, signal #2 is a control signal, and signal #3 is a control signal. For example, signal #2 may be any one of the following: a PUCCH, an SRS, or another control signal. Signal #3 may be any one of the following: a PDCCH, a CSI-RS, a TRS, or another control signal.

For example, signal #2 is a control signal, and signal #3 is a data signal. For example, signal #2 may be any one of the following: a PUCCH, an SRS, or another control signal. Signal #3 may be a PDSCH or another data signal.

For example, signal #2 is a data signal, and signal #3 is a control signal. For example, signal #2 may be a PUSCH or another data signal. Signal #3 may be any one of the following: a PDCCH, a CSI-RS, a TRS, or another control signal.

For example, signal #2 is a data signal, and signal #3 is a data signal. For example, signal #2 may be a PUSCH or another data signal. Signal #3 may be a PDSCH or another data signal.

In another possible manner, when signal #2 is a control signal, and signal #3 is a semi-persistently scheduled signal, the priority of signal #2 is higher than or equal to the priority of signal #3, and the relay device sends signal #2 in the target time period.

For example, signal #2 may be any one of the following: a PUCCH, an SRS, or another control signal. Signal #3 may be a semi-persistently scheduled PDCCH, a semi-persistently scheduled CSI-RS, a semi-persistently scheduled TRS, or another semi-persistently scheduled signal.

In another possible manner, when signal #2 is a semi-persistently scheduled signal, and signal #3 is a semi-persistently scheduled signal, the priority of signal #2 is higher than or equal to the priority of signal #3, and the relay device sends signal #2 in the target time period.

For example, signal #2 may be a semi-persistently scheduled PUCCH, a semi-persistently scheduled SRS, or another semi-persistently scheduled signal. Signal #3 may be a semi-persistently scheduled PDCCH, a semi-persistently scheduled CSI-RS, a semi-persistently scheduled TRS, or another semi-persistently scheduled signal.

Optionally, the priorities of signal #2 and signal #3 are classified based on functions of signals. When a function of signal #2 meets the first condition, the relay device sends signal #2 in the target time period.

That the function of signal #2 meets the first condition may include: The function of signal #2 may be at least one of the following: feedback measurement reporting, scheduling requesting, and time synchronization.

According to Case #D, when the network device configures to transmit signal #2 and signal #3 in the target time period, the relay device may determine, by determining whether signal #2 and/or signal #3 meet/meets the first condition (the priority of signal #2 is higher than or equal to the priority of signal #3), whether to send signal #2 in the target time period. When the relay device determines that signal #2 and/or the signal 3 meet/meets the first condition, the relay device sends signal #2 in the target time period, so that signal interaction between the relay device and the network device can be preferentially ensured, the network device can control the relay device or assist in controlling the relay device, and the relay device can preferentially obtain a correct configuration.

Case #E: When signal #1 and/or signal #3 do/does not meet the first condition, the relay device sends signal #3 in the target time period.

The first condition may be that a priority of signal #1 is higher than or equal to a priority of signal #3. Signal #1 and/or signal #3 do/does not meet the first condition, in other words, the priority of signal #3 is higher than the priority of signal #1.

For example, the relay device does not receive signal #1 in the target time period.

Optionally, the priorities of signal #1 and signal #3 are classified based on signal types, where there is at least one of the following signal types: a public signal, a data signal, and a control signal.

The public signal may be any one of the following: an SSB, system information, paging information, a random access response signal (for example, Msg 2), a downlink signal (for example, Msg 4), or another public signal. The data signal may be a signal for data information transmission. For example, the data signal may be a PDSCH or another data signal. The control signal may be a signal for control information transmission. For example, the control signal may be any one of the following: a PDCCH, a CSI-RS, a TRS, or another control signal.

In a possible manner, when signal #3 is a public signal, the priority of signal #3 is higher than the priority of signal #1, and the relay device sends signal #3 in the target time period.

For example, signal #3 is a public signal, and signal #1 is a public signal. For example, signal #3 may be any one of the following: an SSB, system information, paging information, a random access response signal (for example, Msg 2), a downlink signal (for example, Msg 4), or another public signal. Signal #1 may be any one of the following: an SSB, system information, paging information, a random access response signal (for example, Msg 2), a downlink signal (for example, Msg 4), or another public signal.

For example, signal #3 is a public signal, and signal #1 is a data signal. For example, signal #3 may be any one of the following: an SSB, system information, paging information, a random access response signal (for example, Msg 2), a downlink signal (for example, Msg 4), or another public signal. Signal #1 may be a PDSCH or another data signal.

For example, signal #3 is a public signal, and signal #1 is a control signal. For example, signal #3 may be any one of the following: an SSB, system information, paging information, a random access response signal (for example, Msg 2), a downlink signal (for example, Msg 4), or another public signal. Signal #1 may be any one of the following: a PDCCH, a CSI-RS, a TRS, or another control signal.

In another possible manner, when signal #3 is a control signal, and signal #1 is a non-public signal, the priority of signal #3 is higher than the priority of signal #1, and the relay device sends signal #3 in the target time period.

For example, signal #3 is a control signal, and signal #1 is a data signal. For example, signal #3 may be any one of the following: a PDCCH, a CSI-RS, a TRS, or another control signal. Signal #1 may be a PDSCH or another data signal.

For example, signal #3 is a control signal, and signal #1 is a control signal. For example, signal #3 may be any one of the following: a PDCCH, a CSI-RS, a TRS, or another control signal. Signal #1 may be any one of the following: a PDCCH, a CSI-RS, a TRS, or another control signal.

In another possible manner, when signal #3 is a control signal, and signal #1 is a semi-persistently scheduled signal, the priority of signal #3 is higher than the priority of signal #1, and the relay device sends signal #3 in the target time period.

For example, signal #3 may be any one of the following: a PDCCH, a CSI-RS, a TRS, or another control signal. Signal #1 may be a semi-persistently scheduled PDCCH, a semi-persistently scheduled CSI-RS, a semi-persistently scheduled TRS, or another semi-persistently scheduled signal.

In another possible manner, when signal #3 is a semi-persistently scheduled signal, and signal #1 is a semi-persistently scheduled signal, the priority of signal #3 is higher than the priority of signal #1, and the relay device sends signal #3 in the target time period.

For example, signal #3 may be a semi-persistently scheduled PDCCH, a semi-persistently scheduled CSI-RS, a semi-persistently scheduled TRS, or another semi-persistently scheduled signal. Signal #1 may be a semi-persistently scheduled PDCCH, a semi-persistently scheduled CSI-RS, a semi-persistently scheduled TRS, or another semi-persistently scheduled signal.

According to Case #E, when the network device configures to transmit signal #1 and signal #3 in the target time period, the relay device may determine, by determining whether signal #1 and/or signal #3 meet/meets the first condition, whether to send signal #3 in the target time period. When the relay device determines that signal #1 and/or signal #3 do/does not meet the first condition, to be specific, the priority of signal #3 is higher than the priority of signal #1, the relay device sends signal #3 in the target time period, so that the relay device preferentially assists in signal transmission between the network device and the terminal device, to ensure communication continuity between the network device and the terminal device.

Case #F: When signal #2 and/or signal #4 do/does not meet the first condition, the relay device sends signal #4 in the target time period.

The first condition may be that a priority of signal #2 is higher than or equal to a priority of signal #4. Signal #2 and/or the signal 4 do/does not meet the first condition, in other words, the priority of signal #4 is higher than the priority of signal #2.

For example, the relay device does not send signal #2 in the target time period.

Optionally, the priorities of signal #2 and signal #4 are classified based on signal types, where there is at least one of the following signal types: a public signal, a data signal, and a control signal.

The public signal may be any one of the following: a PRACH, a random access preamble signal (for example, Msg 1), an uplink signal (for example, Msg 3), or another public signal. The data signal may be a signal for data information transmission. For example, the data signal may be a PUSCH or another data signal. The control signal may be a signal for control information transmission. For example, the control signal may be any one of the following: a PUCCH, an SRS, or another control signal.

In a possible manner, when signal #4 is a public signal, the priority of signal #4 is higher than the priority of signal #2, and the relay device sends signal #4 in the target time period.

For example, signal #4 is a public signal, and signal #2 is a public signal. For example, signal #4 may be any one of the following: a PRACH, a random access preamble signal (for example, Msg 1), an uplink signal (for example, Msg 3), or another public signal. Signal #2 may be any one of the following: a PRACH, a random access preamble signal (for example, Msg 1), an uplink signal (for example, Msg 3), or another public signal.

For example, signal #4 is a public signal, and signal #2 is a data signal. For example, signal #4 may be any one of the following: a PRACH, a random access preamble signal (for example, Msg 1), an uplink signal (for example, Msg 3), or another public signal. Signal #2 may be a PUSCH or another data signal.

For example, signal #4 is a public signal, and signal #2 is a control signal. For example, signal #4 may be any one of the following: a PRACH, a random access preamble signal (for example, Msg 1), an uplink signal (for example, Msg 3), or another public signal. Signal #2 may be any one of the following: a PUCCH, an SRS, or another control signal.

In another possible manner, when signal #4 is a control signal, and signal #2 is a non-public signal, the priority of signal #4 is higher than the priority of signal #2, and the relay device sends signal #4 in the target time period.

For example, signal #4 is a control signal, and signal #2 is a data signal. For example, signal #4 may be any one of the following: a PUCCH, an SRS, or another control signal. Signal #2 may be a PUSCH or another data signal.

For example, signal #4 is a control signal, and signal #2 is a control signal. For example, signal #4 may be any one of the following: a PUCCH, an SRS, or another control signal. Signal #2 may be any one of the following: a PUCCH, an SRS, or another control signal.

In another possible manner, when signal #4 is a control signal, and signal #2 is a semi-persistently scheduled signal, the priority of signal #4 is higher than the priority of signal #2, and the relay device sends signal #4 in the target time period.

For example, signal #4 may be any one of the following: a PUCCH, an SRS, or another control signal. Signal #2 may be a semi-persistently scheduled PUCCH, a semi-persistently scheduled SRS, or another semi-persistently scheduled signal.

In another possible manner, when signal #4 is a semi-persistently scheduled signal, and signal #2 is a semi-persistently scheduled signal, the priority of signal #4 is higher than the priority of signal #2, and the relay device sends signal #4 in the target time period.

For example, signal #4 may be a semi-persistently scheduled PUCCH, a semi-persistently scheduled SRS, or another semi-persistently scheduled signal. Signal #2 may be a semi-persistently scheduled PUCCH, a semi-persistently scheduled SRS, or another semi-persistently scheduled signal.

According to Case #F, when the network device configures to transmit signal #2 and signal #4 in the target time period, the relay device may determine, by determining whether signal #2 and/or signal #4 meet/meets the first condition, whether to send signal #4 in the target time period. When the relay device determines that signal #2 and/or signal #4 do/does not meet the first condition, to be specific, the priority of signal #4 is higher than the priority of signal #2, the relay device sends signal #4 in the target time period, so that the relay device preferentially assists in signal transmission between the network device and the terminal device, to ensure communication continuity between the network device and the terminal device.

Case #G: When signal #1 and/or signal #4 do/does not meet the first condition, the relay device sends signal #4 in the target time period.

The first condition may be that a priority of signal #1 is higher than or equal to a priority of signal #4. Signal #1 and/or the signal 4 do/does not meet the first condition, in other words, the priority of signal #4 is higher than the priority of signal #1.

For example, the relay device does not receive signal #1 in the target time period.

Optionally, the priorities of signal #1 and signal #4 are classified based on signal types, where there is at least one of the following signal types: a public signal, a data signal, and a control signal.

The public signal may be any one of the following: an SSB, system information, paging information, a random access response signal (for example, Msg 2), a downlink signal (for example, Msg 4), a PRACH, a random access preamble signal (for example, Msg 1), an uplink signal (for example, Msg 3), or another public signal. The data signal may be a signal for data information transmission. For example, the data signal may be any one of the following: a PDSCH, a PUSCH, or another data signal. The control signal may be a signal for control information transmission. For example, the control signal may be any one of the following: a PDCCH, a CSI-RS, a TRS, a PUCCH, an SRS, or another control signal.

In a possible manner, when signal #4 is a public signal, the priority of signal #4 is higher than the priority of signal #1, and the relay device sends signal #4 in the target time period.

For example, signal #4 is a public signal, and signal #1 is a public signal. For example, signal #4 may be any one of the following: a PRACH, a random access preamble signal (for example, Msg 1), an uplink signal (for example, Msg 3), or another public signal. Signal #1 may be any one of the following: an SSB, system information, paging information, a random access response signal (for example, Msg 2), a downlink signal (for example, Msg 4), or another public signal.

For example, signal #4 is a public signal, and signal #1 is a data signal. For example, signal #4 may be any one of the following: a PRACH, a random access preamble signal (for example, Msg 1), an uplink signal (for example, Msg 3), or another public signal. Signal #1 may be a PDSCH or another data signal.

For example, signal #4 is a public signal, and signal #1 is a control signal. For example, signal #4 may be any one of the following: a PRACH, a random access preamble signal (for example, Msg 1), an uplink signal (for example, Msg 3), or another public signal. Signal #1 may be any one of the following: a PDCCH, a CSI-RS, a TRS, or another control signal.

In another possible manner, when signal #4 is a control signal, and signal #1 is a non-public signal, the priority of signal #4 is higher than the priority of signal #1, and the relay device sends signal #4 in the target time period.

For example, signal #4 is a control signal, and signal #1 is a data signal. For example, signal #4 may be any one of the following: a PUCCH, an SRS, or another control signal. Signal #1 may be a PDSCH or another data signal.

For example, signal #4 is a control signal, and signal #1 is a control signal. For example, signal #4 may be any one of the following: a PUCCH, an SRS, or another control signal. Signal #1 may be a PDSCH or another data signal.

In another possible manner, when signal #4 is a control signal, and signal #1 is a semi-persistently scheduled signal, the priority of signal #4 is higher than the priority of signal #1, and the relay device sends signal #4 in the target time period.

For example, signal #4 may be any one of the following: a PUCCH, an SRS, or another control signal. Signal #1 may be a semi-persistently scheduled PDCCH, a semi-persistently scheduled CSI-RS, a semi-persistently scheduled TRS, or another semi-persistently scheduled signal.

In another possible manner, when signal #4 is a semi-persistently scheduled signal, and signal #1 is a semi-persistently scheduled signal, the priority of signal #4 is higher than the priority of signal #1, and the relay device sends signal #4 in the target time period.

For example, signal #4 may be a semi-persistently scheduled PUCCH, a semi-persistently scheduled SRS, or another semi-persistently scheduled signal. Signal #1 may be a semi-persistently scheduled PDCCH, a semi-persistently scheduled CSI-RS, a semi-persistently scheduled TRS, or another semi-persistently scheduled signal.

According to Case #G, when the network device configures to transmit signal #1 and signal #4 in the target time period, the relay device may determine, by determining whether signal #1 and/or signal #4 meet/meets the first condition, whether to send signal #4 in the target time period. When the relay device determines that signal #1 and/or signal #4 do/does not meet the first condition, to be specific, the priority of signal #4 is higher than the priority of signal #1, the relay device sends signal #4 in the target time period, so that the relay device preferentially assists in signal transmission between the network device and the terminal device, to ensure communication continuity between the network device and the terminal device.

Case #H: When signal #2 and/or signal #3 do/does not meet the first condition, the relay device sends signal #3 in the target time period.

The first condition may be that a priority of signal #2 is higher than or equal to a priority of signal #3. Signal #2 and/or signal #3 do/does not meet the first condition, in other words, the priority of signal #3 is higher than the priority of signal #2.

For example, the relay device does not send signal #2 in the target time period.

Optionally, the priorities of signal #2 and signal #3 are classified based on signal types, where there is at least one of the following signal types: a public signal, a data signal, and a control signal.

The public signal may be any one of the following: an SSB, system information, paging information, a random access response signal (for example, Msg 2), a downlink signal (for example, Msg 4), a PRACH, a random access preamble signal (for example, Msg 1), an uplink signal (for example, Msg 3), or another public signal. The data signal may be a signal for data information transmission. For example, the data signal may be any one of the following: a PDSCH, a PUSCH, or another data signal. The control signal may be a signal for control information transmission. For example, the control signal may be any one of the following: a PDCCH, a CSI-RS, a TRS, a PUCCH, an SRS, or another control signal.

In a possible manner, when signal #3 is a public signal, the priority of signal #3 is higher than the priority of signal #2, and the relay device sends signal #3 in the target time period.

For example, signal #3 is a public signal, and signal #2 is a public signal. For example, signal #3 may be any one of the following: an SSB, system information, paging information, a random access response signal (for example, Msg 2), a downlink signal (for example, Msg 4), or another public signal. Signal #2 may be any one of the following: a PRACH, a random access preamble signal (for example, Msg 1), an uplink signal (for example, Msg 3), or another public signal.

For example, signal #3 is a public signal, and signal #2 is a data signal. For example, signal #3 may be any one of the following: an SSB, system information, paging information, a random access response signal (for example, Msg 2), a downlink signal (for example, Msg 4), or another public signal. Signal #2 may be a PUSCH or another data signal.

For example, signal #3 is a public signal, and signal #2 is a control signal. For example, signal #3 may be any one of the following: an SSB, system information, paging information, a random access response signal (for example, Msg 2), a downlink signal (for example, Msg 4), or another public signal. Signal #2 may be any one of the following: a PUCCH, an SRS, or another control signal.

In another possible manner, when signal #3 is a control signal, and signal #2 is a non-public signal, the priority of signal #3 is higher than the priority of signal #2, and the relay device sends signal #3 in the target time period.

For example, signal #3 is a control signal, and signal #2 is a data signal. For example, signal #3 may be any one of the following: a PDCCH, a CSI-RS, a TRS, or another control signal. Signal #2 may be a PUSCH or another data signal.

For example, signal #3 is a control signal, and signal #2 is a control signal. For example, signal #3 may be any one of the following: a PDCCH, a CSI-RS, a TRS, or another control signal. Signal #2 may be any one of the following: a PUCCH, an SRS, or another control signal.

In another possible manner, when signal #3 is a control signal, and signal #2 is a semi-persistently scheduled signal, the priority of signal #3 is higher than the priority of signal #2, and the relay device sends signal #3 in the target time period.

For example, signal #3 may be any one of the following: a PDCCH, a CSI-RS, a TRS, or another control signal. Signal #2 may be a semi-persistently scheduled PUCCH, a semi-persistently scheduled SRS, or another semi-persistently scheduled signal.

In another possible manner, when signal #3 is a semi-persistently scheduled signal, and signal #2 is a semi-persistently scheduled signal, the priority of signal #3 is higher than the priority of signal #2, and the relay device sends signal #3 in the target time period.

For example, signal #3 may be a semi-persistently scheduled PDCCH, a semi-persistently scheduled CSI-RS, a semi-persistently scheduled TRS, or another semi-persistently scheduled signal. Signal #2 may be a semi-persistently scheduled PUCCH, a semi-persistently scheduled SRS, or another semi-persistently scheduled signal.

According to Case #H, when the network device configures to transmit signal #2 and signal #3 in the target time period, the relay device may determine, by determining whether signal #2 and/or signal #3 meet/meets the first condition, whether to send signal #3 in the target time period. When the relay device determines that signal #2 and/or signal #3 do/does not meet the first condition, to be specific, the priority of signal #3 is higher than the priority of signal #2, the relay device sends signal #3 in the target time period, so that the relay device preferentially assists in signal transmission between the network device and the terminal device, to ensure communication continuity between the network device and the terminal device.

Based on the foregoing technical solution, when the network device configures to transmit the first signal (for example, signal #1 or signal #2) and the second signal (for example, signal #3 or signal #4) in the target time period, the relay device may determine whether the first signal and/or the second signal meet/meets the first condition, to be specific, whether the priority of the first signal is higher than or equal to the priority of the second signal, to determine a signal to be transmitted. When the first signal and/or the second signal meet/meets the first condition, to be specific, the priority of the first signal is higher than or equal to the priority of the second signal, the relay device transmits the first signal in the target time period, so that signal interaction between the relay device and the network device can be preferentially ensured, the network device can control the relay device or assist in controlling the relay device, and the relay device can preferentially obtain a correct configuration. When the first signal and/or the second signal do/does not meet the first condition, to be specific, the priority of the second signal is higher than the priority of the first signal, the relay device transmits the second signal in the target time period, so that the relay device preferentially assists in signal transmission between the network device and the terminal device, to ensure communication continuity between the network device and the terminal device. According to this manner, the relay device can correctly handle the first signal and the second signal, to avoid relay performance deterioration resulting from confliction between the first signal and the second signal.

Optionally, before determining whether the first signal and/or the second signal meet/meets the first condition, the method 300 further includes:

When the first signal and the second signal meet a second condition, the relay device transmits the first signal and the second signal in the target time period.

It should be understood that the relay device transmits the first signal and the second signal in the target time period, in other words, the relay device transmits both the first signal and the second signal in the target time period. For example, the relay device transmits the first signal and the second signal simultaneously at a specific moment. For another example, the relay device transmits the first signal and the second signal simultaneously at a time interval.

When the first signal and the second signal meet the second condition, the relay device may transmit the first signal and the second signal in the target time period in two possible manners.

In a possible manner, when a difference between power of the first signal and target power is less than or equal to a first threshold, the relay device transmits the first signal and the second signal in the target time period.

The power may be power spectral density, or may be power of a single resource element, or may be power of a subcarrier, or may be power of a data symbol. This is not limited in this embodiment of this application.

The target power may be power of the second signal, or may be a sum of the power of the second signal and an amplification gain (or an amplification multiple) of the relay device for the second signal. A unit of the amplification gain may be dBm (dBm) or dB (dB).

The first threshold may be an integer. For example, the first threshold may be 10. In this case, if the difference between the power of the first signal and the target power is less than or equal to 10, the relay device may transmit the first signal and the second signal in the target time period.

Optionally, the target power is related to at least one of power of a third signal, a bandwidth of the second signal, and the amplification gain of the relay device for the second signal. The third signal is related to the second signal. For example, a quasi co-location (quasi co-location, QCL) relationship is configured between the third signal and the second signal. For another example, beam transmission is performed between the third signal and the second signal. The third signal may be used to assist the relay device in receiving power. For example, the relay device sends the third signal to the network device, and the network device determines receive power based on the third signal, and sends indication information of the receive power to the relay device, so that the relay device may receive power based on the indication information of the receive power. For another example, the relay device sends the third signal to the terminal device, and the terminal device determines receive power based on the third signal, and sends indication information of the receive power to the network device. After receiving the indication information of the receive power, the network device sends the indication information of the receive power to the relay device, so that the relay device may receive power based on the indication information of the receive power.

Optionally, the difference between the power of the first signal and the power of the second signal is related to a type of the first signal and/or a type of the second signal. For example, when the difference between the power of the first signal and the power of the second signal is 0, the first signal and/or the second signal may be PDSCHs/a PDSCH. For another example, when the difference between the power of the first signal and the power of the second signal is 9, the first signal and/or the second signal may be PDSCHs/a PDSCH. For another example, when the difference between the power of the first signal and the power of the second signal is 10, the first signal and/or the second signal may be PDCCHs/a PDCCH. For another example, when the difference between the power of the first signal and the power of the second signal is 0, the first signal and/or the second signal may be PUSCHs/a PUSCH. For another example, when the difference between the power of the first signal and the power of the second signal is 9, the first signal and/or the second signal may be PUSCHs/a PUSCH. For another example, when the difference between the power of the first signal and the power of the second signal is 10, the first signal and/or the second signal may be PUCCHs/a PUCCH.

Optionally, the difference between the power of the first signal and the power of the second signal is related to a modulation scheme of the first signal and/or a modulation scheme of the second signal, and the modulation scheme is in one-to-one correspondence with a modulation order. For example, when the difference between the power of the first signal and the power of the second signal is 0, the modulation scheme of the first signal and/or the modulation scheme of the second signal may be 64 quadrature amplitude modulation (quadrature amplitude modulation, QAM), or may be 256 QAM. For another example, when the difference between the power of the first signal and the power of the second signal is 6, the modulation scheme of the first signal and/or the modulation scheme of the second signal may be 16 QAM. For another example, when the difference between the power of the first signal and the power of the second signal is 9, the modulation scheme of the first signal and/or the modulation scheme of the second signal may be quadrature phase shift keying (quadrature phase shift keying, QPSK). For another example, when the difference between the power of the first signal and the power of the second signal is 12, the modulation scheme of the first signal and/or the modulation scheme of the second signal may be *π*/2 binary phase shift keying (binary phase shift keying, BPSK).

In another possible manner, when a difference between a modulation order of the first signal and a modulation order of the second signal is less than a second threshold, the relay device transmits the first signal and the second signal in the target time period.

The second threshold may be an integer. For example, the second threshold may be 1. In this case, when the difference between the modulation order of the first signal and the modulation order of the second signal is less than or equal to 1, the relay device may transmit the first signal and the second signal in the target time period. For example, when the modulation order of the first signal is QPSK, and the modulation order of the second signal is one of *π*/2 BPSK, QPSK, and 16 QAM, the relay device may transmit the first signal and the second signal in the target time period. For another example, when the modulation order of the first signal is 64 QAM, and the modulation order of the second signal is one of 16 QAM, 64 QAM, and 256 QAM, the relay device may transmit the first signal and the second signal in the target time period. For another example, when the modulation order of the first signal is 256 QAM, and the modulation order of the second signal is 64 QAM or 256 QAM, the relay device may transmit the first signal and the second signal in the target time period.

It should be understood that the second condition may be that the difference between the power of the first signal and the power of the second signal is less than or equal to the first threshold, or may be that the difference between the modulation order of the first signal and the modulation order of the second signal is less than the second threshold, or may be that the difference between the power of the first signal and the power of the second signal is less than or equal to the first threshold and the difference between the modulation order of the first signal and the modulation order of the second signal is less than the second threshold or may be another possible condition. This is not limited in this embodiment of this application.

According to the foregoing manner, when the first signal and the second signal meet the second condition, the relay device may transmit the first signal and the second signal in the target time period, so that signal processing efficiency of the relay device can be improved.

The foregoing mainly uses an example in which whether the first signal and the second signal meet the first condition or the second condition for description. This embodiment of this application is not limited thereto. To further improve the signal processing efficiency of the relay device, transmission time of the first signal may be restricted. In other words, the network device may configure to transmit the first signal at specific time (that is, the target time period). Correspondingly, the relay device may determine whether the first signal needs to be preferentially transmitted at the specific time. In this manner, the relay device can determine, without determining whether the first signal and/or the second signal meet/meets the first condition or the second condition, a signal to be transmitted at the specific time, to improve the signal handling efficiency of the relay device.

The relay device may transmit the first signal at the specific time in the following several manners.

Manner #1: In a TDD configuration periodicity, the relay device may transmit the first signal in a switching slot (or a flexible slot), where a previous slot of the switching slot is a downlink slot, and a next slot of the switching slot is an uplink slot; or a previous slot of the switching slot is an uplink slot, and a next slot of the switching slot is a downlink slot.

In a possible manner, in a TDD configuration periodicity, the relay device receives signal #1 in the switching slot, where a previous slot of the switching slot is a downlink slot, and a next slot of the switching slot is an uplink slot.

FIG. 4 shows a diagram of a data transmission manner according to an embodiment of this application. As shown in FIG. 4, it is assumed that one TDD configuration periodicity has five slots, which are respectively denoted as a slot 0, a slot 1, a slot 2, a slot 3, and a slot 4. The slot 0, the slot 1, and the slot 2 are downlink slots, and the slot 0, the slot 1, and the slot 2 may include downlink symbols. The slot 3 is a switching slot, or may be a flexible slot, and the slot 3 may include at least one of the following: a downlink symbol, an uplink symbol, a guard symbol, and a flexible symbol (that is, a symbol that has not been configured as uplink or downlink). The slot 4 is an uplink slot, and the slot 4 may include an uplink symbol.

In a TDD configuration periodicity, the relay device may send signal #3 on the downlink symbols in the slot 0 to the slot 2, receive signal #1 on the downlink symbol in the slot 3, and send signal #4 on the uplink symbol in the slot 4.

Based on the foregoing manner, in a TDD configuration periodicity, the network device may configure to receive signal #1 in the switching slot. In this case, the relay device can determine, without determining whether signal #1 and/or signal #3 or signal #1 and/or signal #4 meet/meets the first condition or the second condition, whether signal #1 needs to be preferentially received, so that signal processing efficiency of the relay device can be improved, and resource overheads are reduced.

In another possible manner, in a TDD configuration periodicity, the relay device sends signal #2 in the switching slot, where a previous slot of the switching slot is a downlink slot, and a next slot of the switching slot is an uplink slot.

FIG. 5 shows a diagram of another data transmission manner according to an embodiment of this application. As shown in FIG. 5, it is assumed that one TDD configuration periodicity has five slots, which are respectively denoted as a slot 0, a slot 1, a slot 2, a slot 3, and a slot 4. The slot 0, the slot 1, and the slot 2 are downlink slots, and the slot 0, the slot 1, and the slot 2 may include downlink symbols. The slot 3 is a switching slot, or may be a flexible slot, and the slot 3 may include at least one of the following: a downlink symbol, an uplink symbol, a guard symbol, and a flexible symbol (that is, a symbol that has not been configured as uplink or downlink). The slot 4 is an uplink slot, and the slot 4 may include an uplink symbol.

In a TDD configuration periodicity, the relay device may send signal #3 on the downlink symbols in the slot 0 to the slot 2, send signal #2 on the uplink symbol in the slot 3, and send signal #4 on the uplink symbol in the slot 4.

Based on the foregoing manner, in a TDD configuration periodicity, the network device may configure to send signal #2 in the switching slot. In this case, the relay device can determine, without determining whether signal #2 and/or signal #3 or signal #2 and/or signal #4 meet/meets the first condition or the second condition, whether signal #2 needs to be preferentially sent, so that signal processing efficiency of the relay device can be improved, and resource overheads are reduced.

In another possible manner, in a TDD configuration periodicity, the relay device receives signal #1 in the switching slot, where a previous slot of the switching slot is an uplink slot, and a next slot of the switching slot is a downlink slot.

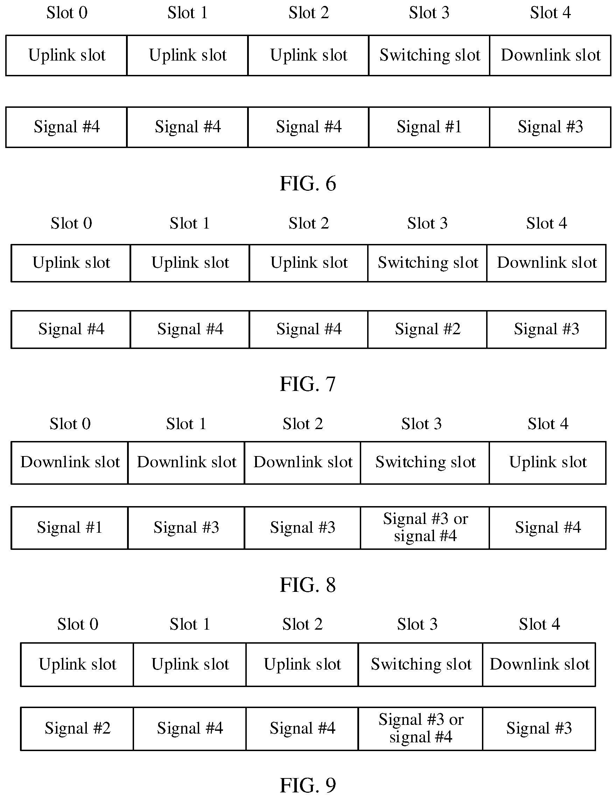

FIG. 6 shows a diagram of another data transmission manner according to an embodiment of this application. As shown in FIG. 6, it is assumed that one TDD configuration periodicity has five slots, which are respectively denoted as a slot 0, a slot 1, a slot 2, a slot 3, and a slot 4. The slot 0, the slot 1, and the slot 2 are uplink slots, and the slot 0, the slot 1, and the slot 2 may include uplink symbols. The slot 3 is a switching slot, or may be a flexible slot, and the slot 3 may include at least one of the following: a downlink symbol, an uplink symbol, a guard symbol, and a flexible symbol (that is, a symbol that has not been configured as uplink or downlink). The slot 4 is a downlink slot, and the slot 4 may include a downlink symbol.

In a TDD configuration periodicity, the relay device may send signal #4 on the uplink symbols in the slot 0 to the slot 2, receive signal #1 on the downlink symbol in the slot 3, and send signal #3 on the downlink symbol in the slot 4.

Based on the foregoing manner, in a TDD configuration periodicity, the network device may configure to receive signal #1 in the switching slot. In this case, the relay device can determine, without determining whether signal #1 and/or signal #3 or signal #1 and/or signal #4 meet/meets the first condition or the second condition, whether signal #1 needs to be preferentially received, so that signal processing efficiency of the relay device can be improved, and resource overheads are reduced.

In another possible manner, in a TDD configuration periodicity, the relay device sends signal #2 in the switching slot, where a previous slot of the switching slot is an uplink slot, and a next slot of the switching slot is a downlink slot.

FIG. 7 shows a diagram of another data transmission manner according to an embodiment of this application. As shown in FIG. 7, it is assumed that one TDD configuration periodicity has five slots, which are respectively denoted as a slot 0, a slot 1, a slot 2, a slot 3, and a slot 4. The slot 0, the slot 1, and the slot 2 are uplink slots, and the slot 0, the slot 1, and the slot 2 may include uplink symbols. The slot 3 is a switching slot, or may be a flexible slot, and the slot 3 may include at least one of the following: a downlink symbol, an uplink symbol, a guard symbol, and a flexible symbol (that is, a symbol that has not been configured as uplink or downlink). The slot 4 is a downlink slot, and the slot 4 may include a downlink symbol.

In a TDD configuration periodicity, the relay device may send signal #4 on the uplink symbols in the slot 0 to the slot 2, send signal #2 on the uplink symbol in the slot 3, and send signal #3 on the downlink symbol in the slot 4.

Based on the foregoing manner, in a TDD configuration periodicity, the network device may configure to send signal #2 in the switching slot. In this case, the relay device can determine, without determining whether signal #2 and/or signal #3 or signal #2 and/or signal #4 meet/meets the first condition or the second condition, whether signal #2 needs to be preferentially sent, so that signal processing efficiency of the relay device can be improved, and resource overheads are reduced.

Manner #2: In a TDD configuration periodicity, the relay device may transmit the first signal in a start slot.

In a possible manner, in a TDD configuration periodicity, when signal #3 is switched to signal #4, the relay device receives signal #1 in the start slot.

FIG. 8 shows a diagram of another data transmission manner according to an embodiment of this application. As shown in FIG. 8, it is assumed that one TDD configuration periodicity has five slots, which are respectively denoted as a slot 0, a slot 1, a slot 2, a slot 3, and a slot 4. The slot 0, the slot 1, and the slot 2 are downlink slots, and the slot 0, the slot 1, and the slot 2 may include downlink symbols. The slot 3 is a switching slot, or may be a flexible slot, and the slot 3 may include at least one of the following: a downlink symbol, an uplink symbol, a guard symbol, and a flexible symbol (that is, a symbol that has not been configured as uplink or downlink). The slot 4 is an uplink slot, and the slot 4 may include an uplink symbol.

In a TDD configuration periodicity, the relay device may receive signal #1 on the downlink symbol in the slot 0, send signal #3 on the downlink symbols in the slot 1 and the slot 2, and send signal #3 on the downlink symbol in the slot 3, or send signal #4 on the uplink symbol in the slot 3, and send signal #4 on the uplink symbol in the slot 4.

It should be understood that in a TDD configuration periodicity, the start slot is a 1^{st} slot for signal transmission. For example, FIG. 8 is a diagram of switching signal #3 to signal #4. In this case, the start slot is the slot 0.

Based on the foregoing manner, in a TDD configuration periodicity, when signal #3 is switched to signal #4, the network device may configure to receive signal #1 in the start slot. According to this manner, in the start slot, the relay device can determine, without determining whether signal #1 and/or signal #3 meet/meets the first condition or the second condition, whether signal #1 needs to be preferentially received, so that signal processing efficiency of the relay device can be improved, a decoding delay can be reduced, and impact of switching between signal #1 and signal #3 on signal #4 can be reduced.

In still another possible manner, in a TDD configuration periodicity, when signal #4 is switched to signal #3, the relay device sends signal #2 in the start slot.

FIG. 9 shows a diagram of another data transmission manner according to an embodiment of this application. As shown in FIG. 9, it is assumed that one TDD configuration periodicity has five slots, which are respectively denoted as a slot 0, a slot 1, a slot 2, a slot 3, and a slot 4. The slot 0, the slot 1, and the slot 2 are uplink slots, and the slot 0, the slot 1, and the slot 2 may include uplink symbols. The slot 3 is a switching slot, or may be a flexible slot, and the slot 3 may include at least one of the following: a downlink symbol, an uplink symbol, a guard symbol, and a flexible symbol (that is, a symbol that has not been configured as uplink or downlink). The slot 4 is a downlink slot, and the slot 4 may include a downlink symbol.

In a TDD configuration periodicity, the relay device may send signal #2 on the uplink symbol in the slot 0, send signal #4 on the uplink symbols in the slot 1 and the slot 2, and send signal #3 on the downlink symbol in the slot 3, or send signal #4 on the uplink symbol in the slot 3, and send signal #3 on the downlink symbol in the slot 4.

It should be understood that in a TDD configuration periodicity, the start slot is a 1^{st} slot for signal transmission. For example, FIG. 9 is a diagram of switching signal #4 to signal #3. In this case, the start slot is the slot 0.

Based on the foregoing manner, in a TDD configuration periodicity, when signal #4 is switched to signal #3, the network device may configure to send signal #2 in the start slot. According to this manner, in the start slot, the relay device can determine, without determining whether signal #2 and/or signal #4 meet/meets the first condition or the second condition, whether signal #2 needs to be preferentially sent, so that signal processing efficiency of the relay device can be improved, a decoding delay can be reduced, and impact of switching between signal #2 and signal #4 on signal #3 can be reduced.

Manner #3: In a first periodicity T, the relay device may transmit the first signal in a time window.

The first periodicity T is a periodicity for transmitting the first signal, the first periodicity T corresponds to one or more downlink slots or uplink slots, one time window corresponds to one or more downlink slots or uplink slots, and the first periodicity T is greater than or equal to a width W of a time window in the periodicity.

Optionally, the network device sends configuration information to the relay device, where the configuration information further includes the first periodicity T, start time t0 of a 1^{st} time window, and the width W of the time window. The width W of the time window is equal to a length of one or more slots.

It should be understood that, when the time window is the 1^{st} time window, the start time of the 1^{st} time window is t0; or when the time window is an N^{th} time window, start time of the N^{th} time window is t0+(N-1)T. The relay device may transmit the first signal in one time window, or may transmit the first signal in a plurality of time windows. This is not limited in this embodiment of this application.

It should be further understood that in different periodicities, widths W of time windows may be the same or may be different. This is not limited in this embodiment of this application.

In a possible manner, in the first periodicity T, the relay device receives signal #1 in a time window corresponding to one or more downlink slots.

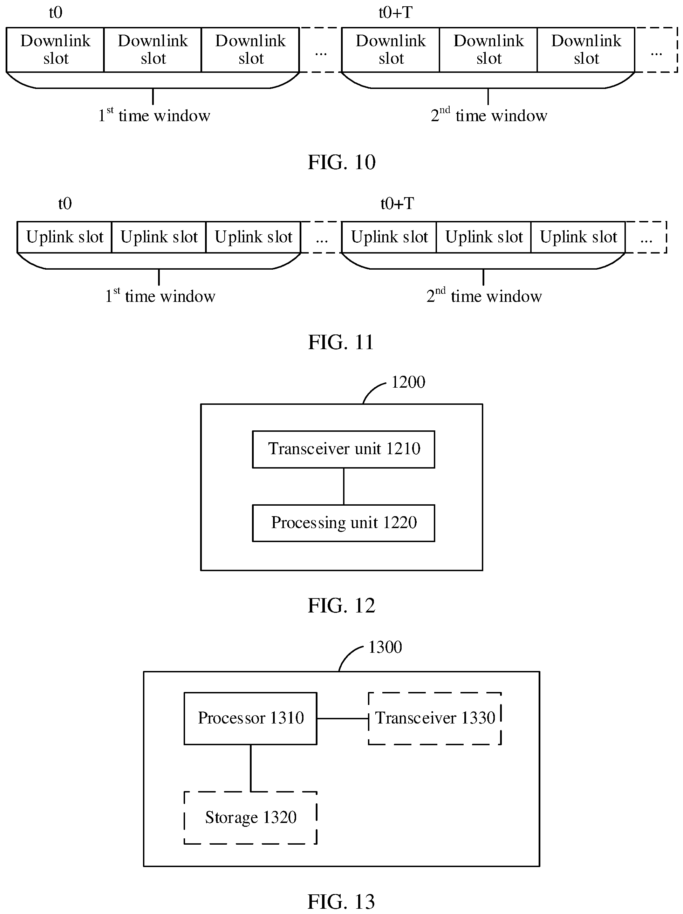

FIG. 10 shows a diagram of another data transmission manner according to an embodiment of this application. As shown in FIG. 10, it is assumed that the 1^{st} time window corresponds to three downlink slots, the width W of the 1^{st} time window is equal to a length of the three downlink slots, the start time of the 1^{st} time window is t0, and start time of a 2^{nd} time window is t0+T.

For example, the relay device may receive signal #1 in the 1^{st} time window, or may receive signal #1 in the 2^{nd} time window, or may receive signal #1 in both the 1^{st} time window and the 2^{nd} time window. This is not limited in this embodiment of this application.

Optionally, the first periodicity T may be determined based on a TDD configuration periodicity. For example, the first periodicity T may be 2ⁿ times the TDD configuration periodicity, where n is a positive integer.

Optionally, the first periodicity T may be determined based on an index corresponding to a subcarrier spacing. For example, when the index corresponding to the subcarrier spacing is 1, the first periodicity T corresponds to one downlink slot. For another example, when the index corresponding to the subcarrier spacing is 2, the first periodicity T corresponds to two downlink slots.

Optionally, widths W of time windows in different periodicities may be the same. For example, widths W of time windows in different periodicities are all equal to a length of one downlink slot. According to this manner, resource overheads can be reduced.

Optionally, the start time t0 of the time window may be at a fixed location in the TDD configuration periodicity. For example, as shown in FIG. 8, the start time t0 of the time window may correspond to the start slot (that is, the slot 0). According to this manner, the relay device can receive signal #1 at a fixed location in a fixed periodicity, so that signal processing efficiency of the relay device can be improved.

Optionally, there may be a plurality of different time windows in the first periodicity T. The plurality of different time windows correspond to one or more downlink slots. The relay device may receive different types of signals #1 in the plurality of different time windows. For example, there are three time windows in the first periodicity T, and the relay device may receive a public signal (for example, an SSB or system information), a data signal (for example, a PDSCH), and a control signal (for example, a PDCCH, a CSI-IS, or a TRS) in the three time windows respectively.

Based on the foregoing manner, in the first periodicity T, the relay device receives signal #1 in the time window corresponding to the one or more downlink slots. According to this manner, in the time window, the relay device can determine, without determining whether signal #1 and/or signal #3 meet/meets the first condition or the second condition, whether signal #1 needs to be preferentially received, so that the signal processing efficiency of the relay device can be improved.

In another possible manner, in the first periodicity, the relay device sends signal #2 in a time window corresponding to one or more uplink slots.

FIG. 11 shows a diagram of another data transmission manner according to an embodiment of this application. As shown in FIG. 11, it is assumed that the 1^{st} time window corresponds to three uplink slots, the width W of the 1^{st} time window is equal to a length of the three uplink slots, the start time of the 1^{st} time window is t0, and start time of a 2^{nd} time window is t0+T.

For example, the relay device may send signal #2 in the 1^{st} time window, or may send signal #2 in the 2^{nd} time window, or may send signal #2 in both the 1^{st} time window and the 2^{nd} time window. This is not limited in this embodiment of this application.

Optionally, the first periodicity T may be determined based on a TDD configuration periodicity. For example, the first periodicity T may be 2ⁿ times the TDD configuration periodicity, where n is a positive integer.

Optionally, the first periodicity T may be determined based on an index corresponding to a subcarrier spacing. For example, when the index corresponding to the subcarrier spacing is 1, the first periodicity T corresponds to one downlink slot. For another example, when the index corresponding to the subcarrier spacing is 2, the first periodicity T corresponds to two downlink slots.

Optionally, widths W of time windows in different periodicities may be the same. For example, widths W of time windows in different periodicities are all equal to a length of one uplink slot. According to this manner, resource overheads can be reduced.

Optionally, the start time t0 of the time window may be at a fixed location in the TDD configuration periodicity. For example, as shown in FIG. 9, the start time t0 of the time window may correspond to the start slot (that is, the slot 0). According to this manner, the relay device can send signal #2 at a fixed location in a fixed periodicity, so that signal processing efficiency of the relay device can be improved.

Optionally, there may be a plurality of different time windows in the first periodicity T. The plurality of different time windows correspond to one or more uplink slots. The relay device may send different types of signals #2 in the plurality of different time windows. For example, there are three time windows in the first periodicity T, and the relay device may send a public signal (for example, a PRACH), a data signal (for example, a PUSCH), and a control signal (for example, an SRS or a PUCCH) in the three time windows respectively.

Based on the foregoing manner, in the first periodicity T, the relay device sends signal #2 in the time window corresponding to the one or more uplink slots. According to this manner, in the time window, the relay device can determine, without determining whether signal #2 and/or signal #4 meet/meets the first condition or the second condition, whether signal #2 needs to be preferentially sent, so that the signal processing efficiency of the relay device can be improved.

Based on the foregoing technical solution, the network device may configure to transmit the first signal at specific time. Correspondingly, the relay device may determine whether the first signal needs to be preferentially transmitted at the specific time. In this case, the relay device can determine, without determining whether the first signal and/or the second signal meet/meets the first condition or the second condition, a signal to be transmitted at the specific time, so that the signal handling efficiency of the relay device can be improved.

Optionally, when the function of signal #1 is related to one or more of beam management, power control, connection and disconnection control, timing information, and configuration information of the second signal, the relay device may determine whether signal #1 needs to be preferentially received at the specific time, to ensure that the relay device obtains a correct function configuration, and improve the signal processing efficiency of the relay device.

Optionally, when the function of signal #2 is related to one or more of feedback measurement reporting, scheduling requesting, and time synchronization, the relay device may determine whether signal #2 needs to be preferentially sent at the specific time, to ensure that the relay device obtains a correct function configuration, and improve the signal processing efficiency of the relay device.

Optionally, the relay device may transmit the second signal at the specific time. For related descriptions, refer to descriptions in Manner #1, Manner #2, and Manner #3. Details are not described herein again.

Optionally, the first periodicity T in which the relay device transmits the first signal may be determined based on a time periodicity for transmitting the second signal. For example, the first periodicity T in which the relay device transmits the first signal may be 2^{k} times the time periodicity for transmitting the second signal, where k is a positive integer.

Optionally, a time window in which the relay device transmits the first signal may be determined based on a time window for transmitting the second signal. For example, start time t0 of a 1^{st} time window of the first signal is located in D slots before start time of a 1^{st} time window of the second signal, and the D slots may be determined based on a decoding delay and an instruction effective delay.

Optionally, when the network device configures to transmit a plurality of first signals in the target time period, and types of the plurality of first signals may be different, the relay device may determine priorities of the plurality of first signals based on the types of the plurality of first signals, to determine a signal to be transmitted in the target time period. For example, when the types of the plurality of first signals are respectively a public signal, a control signal, and a data signal, the relay device may determine that the priorities of the plurality of first signals are the public signal, the control signal, and the data signal in descending order.

Optionally, when the network device configures to transmit a plurality of second signals in the target time period, and types of the plurality of second signals may be different, the relay device may determine priorities of the plurality of second signals based on the types of the plurality of second signals, to determine a signal to be transmitted in the target time period. For example, when the types of the plurality of second signals are respectively a public signal, a control signal, and a data signal, the relay device may determine that the priorities of the plurality of second signals are the public signal, the control signal, and the data signal in descending order.

Optionally, when the network device configures to transmit the first signal and the second signal in the target time period, the relay device neither transmits the first signal nor transmits the second signal. According to this manner, when the network device configures to transmit the first signal and the second signal in the target time period, the relay device may consider that this configuration is incorrect. In this case, the relay device neither transmits the first signal nor transmits the second signal, so that power consumption can be reduced.

It should be understood that a time unit (for example, a quantity of slots) for transmitting the first signal or the second signal by the relay device may be determined based on configuration information of the network device, or may be determined based on a subcarrier spacing. A time unit for transmitting the first signal by the relay device may be the same as or different from a time unit for transmitting the second signal. This is not limited in this embodiment of this application.

According to the foregoing description, the function of signal #1 may include at least one of the following: beam management, power control, connection and disconnection control, timing information, and configuration information of the second signal. The beam management may be beam switching, in other words, to switch a beam. The beam management may be configuration of a forwarding beam, or may be configuration of a receive beam. For example, the relay device receives a beam (also referred to as a backhaul-side beam) of signal #1 from the network device. For another example, the relay device sends a beam (also referred to as a backhaul-side beam) of signal #2 to the network device. For another example, the relay device sends a beam (also referred to as an access-side beam) of signal #3 to the terminal device. For another example, the relay device receives a beam (also referred to as an access-side beam) of signal #4 from the terminal device. The power control may be power adjustment (or multiple amplification, or whether to enable amplification and forwarding), in other words, to adjust power. The connection and disconnection control may include one of enabling transmission of the second signal and disabling transmission of the second signal. The timing information may be timing adjustment, in other words, to adjust timing. The configuration information of the second signal may be adjustment on a transmission direction of the second signal, in other words, to adjust the signal transmission direction.

The relay device may receive signal #1 from the network device. When functions of signal #1 conflict with each other, the relay device may fail to perform a correct operation. For example, when the connection and disconnection control conflicts with another function (such as the beam management or the power control), the relay device cannot determine whether the connection and disconnection control needs to be preferentially performed.

In view of the foregoing technical problem, this application further provides a method for configuring priorities of the connection and disconnection control and another function by the network device. According to this method, when the connection and disconnection control conflicts with another function, the relay device can determine an operation that needs to be preferentially performed.

There may be the following several possible manners for the priorities of the connection and disconnection control and another function.

In a possible manner, in the target time period, when the relay device is configured as at least one of the following, the relay device disables transmission of the second signal:
(1) the relay device is configured to disable transmission of the second signal and enable transmission of the second signal;
(2) the relay device is configured to disable transmission of the second signal and adjust power;
(3) the relay device is configured to disable transmission of the second signal and switch a beam;
(4) the relay device is configured to disable transmission of the second signal and adjust timing;
(5) the relay device is configured to disable transmission of the second signal and adjust a signal transmission direction; and
(6) the relay device is not configured to switch a beam and/or adjust power.

In another possible manner, in the target time period, when the relay device is configured as at least one of the following, the relay device does not disable transmission of the second signal:
(1) the relay device is configured to disable transmission of the second signal and enable transmission of the second signal;
(2) the relay device is configured to disable transmission of the second signal and adjust power;
(3) the relay device is configured to disable transmission of the second signal and switch a beam;
(4) the relay device is configured to disable transmission of the second signal and adjust timing; and
(5) the relay device is configured to disable transmission of the second signal and adjust a signal transmission direction.

Optionally, in the target time period, the relay device is configured to disable transmission of the second signal and adjust power, and when adjusted power is related to an accumulation amount, the adjusted power may be accumulated.

Optionally, in the target time period, the relay device is configured to disable transmission of the second signal and adjust timing, and when adjusted timing is related to an accumulation amount, the adjusted timing may be accumulated.

Based on the foregoing technical solution, when the connection and disconnection control conflicts with another function, the relay device can determine, based on the priorities of the connection and disconnection control and another function, an operation that needs to be preferentially performed, so that the relay device has a better response mechanism, to further improve network performance.

It may be understood that the examples in embodiments of this application are merely intended to help a person skilled in the art understand embodiments of this application, but are not intended to limit embodiments of this application to a specific scenario shown in the examples. A person skilled in the art certainly can make various equivalent modifications or changes based on the examples provided in embodiments of this application, and such modifications or changes also fall within the scope of embodiments of this application. For example, "the second signal is a signal transmitted with assistance of the relay device" may be replaced with "the second signal is a signal transmitted between the network device and the terminal device, and the second signal is forwarded by the relay device".

It may be further understood that some optional features in embodiments of this application may be independent of other features in some scenarios, or may be combined with other features in some scenarios. This is not limited.

It may be further understood that the solutions in embodiments of this application may be appropriately combined for use, and explanations or descriptions of terms in embodiments may be mutually referenced or explained in embodiments. This is not limited.

It may be further understood that various numeric sequence numbers in embodiments of this application do not mean execution sequences, but are merely for differentiation for ease of description, and therefore should not constitute any limitation on an implementation process of embodiments of this application.

It should be understood that in this application, "at least one (item)" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

It may be further understood that some message names, such as the first signal and the second signal, are involved in embodiments of this application. It should be understood that the names do not limit the protection scope of embodiments of this application.

It may be further understood that, in the foregoing method embodiments, methods and operations implemented by the device (for example, the relay device) may alternatively be implemented by a component (for example, a chip or a circuit) of the device.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

The data transmission method provided in embodiments of this application is described above in detail with reference to FIG. 3 to FIG. 11. The following describes in detail a communication apparatus provided in embodiments of this application with reference to FIG. 12 to FIG. 14.

FIG. 12 is a block diagram of a communication apparatus according to an embodiment of this application. The apparatus 1200 includes a transceiver unit 1210, and the transceiver unit 1210 may be configured to implement a corresponding communication function. The transceiver unit 1210 may also be referred to as a communication interface or a communication unit.

Optionally, the apparatus 1200 may further include a processing unit 1220. The processing unit 1220 may be configured to implement a corresponding processing function, for example, determine whether a first signal and/or a second signal meet/meets a first condition.

Optionally, the apparatus 1200 further includes a storage unit. The storage unit may be configured to store instructions and/or data. The processing unit 1220 may read the instructions and/or the data in the storage unit, so that the apparatus implements actions of the relay device in the foregoing method embodiments.

The apparatus 1200 may be configured to perform an action performed by the relay device in the foregoing method embodiments. In this case, the apparatus 1200 may be the relay device or a component of the relay device. The transceiver unit 1210 is configured to perform receiving and sending-related operations on a relay device side in the foregoing method embodiments. The processing unit 1220 is configured to perform processing-related operations on the relay device side in the foregoing method embodiments.

In a design, the apparatus 1200 is configured to perform actions performed by the relay device in the foregoing method embodiments.

In a possible implementation, the transceiver unit 1210 is configured to receive configuration information from a network device, where the configuration information indicates to transmit a first signal and a second signal in a target time period, the first signal is a signal for communication between the apparatus and the network device, and the second signal is a signal transmitted with assistance of the apparatus. The processing unit 1220 is configured to determine that the first signal and/or the second signal meet/meets a first condition, and the transceiver unit 1210 is further configured to transmit the first signal in the target time period. The processing unit 1220 is further configured to determine that the first signal and/or the second signal do/does not meet the first condition, and the transceiver unit 1210 is further configured to transmit the second signal in the target time period.

Optionally, the first condition is that a priority of the first signal is higher than or equal to a priority of the second signal, the priorities of the first signal and the second signal are classified based on signal types, and there is at least one of the following signal types: a public signal, a data signal, and a control signal.

Optionally, that the first signal and/or the second signal meet/meets a first condition includes: The first signal is a public signal; the first signal is a non-public signal, and the second signal is a non-public signal; the first signal is a control signal, and the second signal is a semi-persistently scheduled signal; or the first signal is a semi-persistently scheduled signal, and the second signal is a semi-persistently scheduled signal.

Optionally, that the first signal and/or the second signal do/does not meet a first condition includes: The second signal is a public signal; the second signal is a control signal, and the first signal is a non-public signal; the second signal is a control signal, and the first signal is a semi-persistently scheduled signal; or the second signal is a semi-persistently scheduled signal, and the first signal is a semi-persistently scheduled signal.

Optionally, that the first signal and/or the second signal meet/meets a first condition includes: The first signal has at least one of the following functions: beam management, power control, connection and disconnection control, timing information, configuration information of the second signal, feedback measurement reporting, scheduling requesting, and time synchronization.

Optionally, before whether the first signal and/or the second signal meet/meets the first condition is determined, the processing unit 1220 is configured to determine that the first signal and the second signal meet a second condition, and the transceiver unit 1210 is configured to transmit the first signal and the second signal in the target time period.

Optionally, the second condition is that a difference between power of the first signal and power of the second signal is less than or equal to a first threshold, and/or the second condition is that a difference between a modulation order of the first signal and a modulation order of the second signal is less than or equal to a second threshold.

The apparatus 1200 may implement steps or procedures corresponding to steps or procedures performed by the relay device in the method embodiments in embodiments of this application. The apparatus 1200 may include units configured to perform the method performed by the relay device in any one of embodiments shown in FIG. 3 to FIG. 11.

It should be understood that a specific process in which the units perform the foregoing corresponding steps is described in detail in the foregoing method embodiments. For brevity, details are not described herein.

It should be understood that the apparatus 1200 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a storage, a merged logic circuit, and/or another appropriate component that supports the described function. In an optional example, a person skilled in the art may understand that the apparatus 1200 may be specifically the relay device in the foregoing embodiments, and may be configured to perform the procedures and/or steps corresponding to the relay device in the foregoing method embodiments. To avoid repetition, details are not described herein again.

The apparatus 1200 in the foregoing solutions has functions of implementing corresponding steps performed by the relay device in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver), and another unit, for example, the processing unit, may be replaced by a processor, to separately perform a sending and receiving operation and a related processing operation in the method embodiments.

In addition, the transceiver unit 1210 may alternatively be a transceiver circuit (for example, may include a receiving circuit and a sending circuit), and the processing unit may be a processing circuit.

It should be noted that the apparatus in FIG. 12 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

As shown in FIG. 13, an embodiment of this application provides another communication apparatus 1300. The apparatus 1300 includes a processor 1310. The processor 1310 is coupled to a storage 1320, the storage 1320 is configured to store a computer program or instructions and/or data, and the processor 1310 is configured to execute the computer program or the instructions stored in the storage 1320, or read the data stored in the storage 1320, to perform the method in the foregoing method embodiments.

Optionally, there are one or more processors 1310.

Optionally, there are one or more storages 1320.

Optionally, the storage 1320 and the processor 1310 are integrated or disposed separately.

Optionally, as shown in FIG. 13, the apparatus 1300 further includes a transceiver 1330. The transceiver 1330 is configured to receive and/or send a signal. For example, the processor 1310 is configured to control the transceiver 1330 to receive and/or send a signal.

In a solution, the apparatus 1300 is configured to implement operations performed by the relay device in the foregoing method embodiments.

For example, the processor 1310 is configured to execute the computer program or the instructions stored in the storage 1320, to implement related operations of the relay device in the foregoing method embodiments, for example, the method performed by the relay device in any one of embodiments shown in FIG. 3 to FIG. 11.

It should be understood that, the processor mentioned in embodiments of this application may be a central processing unit (central processing unit, CPU), and may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the storage mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the storage (a storage module) may be integrated into the processor.

It should further be noted that the storage described herein is intended to include, but is not limited to, these and any other suitable type of storage.

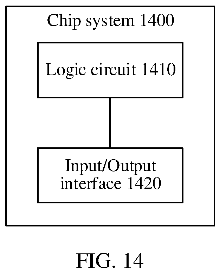

As shown in FIG. 14, an embodiment of this application provides a chip system 1400. The chip system 1400 (or may be referred to as a processing system) includes a logic circuit 1410 and an input/output interface (input/output interface) 1420.

The logic circuit 1410 may be a processing circuit in the chip system 1400. The logic circuit 1410 may be coupled and connected to a storage unit, and invoke instructions in the storage unit, so that the chip system 1400 can implement the methods and functions in embodiments of this application. The input/output interface 1420 may be an input/output circuit in the chip system 1400, and outputs information processed by the chip system 1400, or inputs to-be-processed data or signaling information to the chip system 1400 for processing.

In a solution, the chip system 1400 is configured to implement operations performed by the relay device in the foregoing method embodiments.

For example, the logic circuit 1410 is configured to implement processing related operations performed by the relay device in the foregoing method embodiments, for example, a processing-related operation performed by the relay device in any one of embodiments shown in FIG. 3 to FIG. 11. The input/output interface 1420 is configured to implement sending and/or receiving-related operations performed by the relay device in the foregoing method embodiments, for example, a sending and/or receiving-related operation performed by the relay device in any one of embodiments shown in FIG. 3 to FIG. 11.

An embodiment of this application further provides a computer-readable storage medium. The computer-readable storage medium stores computer instructions used for implementing the methods performed by the relay device in the foregoing method embodiments.

For example, when the computer program is executed by a computer, the computer can implement the methods performed by the relay device in the foregoing method embodiments.

An embodiment of this application further provides a computer program product, including instructions. When the instructions are executed by a computer, the methods performed by the relay device in the foregoing method embodiments are implemented.

For explanations and beneficial effect of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or a part of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, comprising:
receiving, by a relay device, configuration information from a network device, wherein the configuration information indicates to transmit a first signal and a second signal in a target time period, the first signal is a signal for communication between the relay device and the network device, and the second signal is a signal transmitted with assistance of the relay device;
when the first signal and/or the second signal meet/meets a first condition, transmitting, by the relay device, the first signal in the target time period; and
when the first signal and/or the second signal do/does not meet a first condition, transmitting, by the relay device, the second signal in the target time period.

2. The method according to claim 1, wherein the first condition is that a priority of the first signal is higher than or equal to a priority of the second signal; and
the priorities of the first signal and the second signal are classified based on signal types, and there is at least one of the following signal types: a public signal, a data signal, and a control signal.

3. The method according to claim 1 or 2, wherein that the first signal and/or the second signal meet/meets a first condition comprises:
the first signal is a public signal;
the first signal is a non-public signal, and the second signal is a non-public signal;
the first signal is a control signal, and the second signal is a semi-persistently scheduled signal; or
the first signal is a semi-persistently scheduled signal, and the second signal is a semi-persistently scheduled signal.

4. The method according to claim 1 or 2, wherein that the first signal and/or the second signal do/does not meet a first condition comprises:
the second signal is a public signal;
the second signal is a control signal, and the first signal is a non-public signal;
the second signal is a control signal, and the first signal is a semi-persistently scheduled signal; or
the second signal is a semi-persistently scheduled signal, and the first signal is a semi-persistently scheduled signal.

5. The method according to claim 1, wherein that the first signal and/or the second signal meet/meets a first condition comprises:
the first signal has at least one of the following functions: beam management, power control, connection and disconnection control, timing information, configuration information of the second signal, feedback measurement reporting, scheduling requesting, and time synchronization.

6. The method according to any one of claims 1 to 5, wherein before determining whether the first signal and/or the second signal meet/meets the first condition, the method further comprises:
when the first signal and the second signal meet a second condition, transmitting, by the relay device, the first signal and the second signal in the target time period.

7. The method according to claim 6, wherein
the second condition is that a difference between power of the first signal and power of the second signal is less than or equal to a first threshold, and/or the second condition is that a difference between a modulation order of the first signal and a modulation order of the second signal is less than or equal to a second threshold.

8. A data transmission apparatus, comprising a transceiver unit and a processing unit, wherein
the transceiver unit is configured to receive configuration information from a network device, wherein the configuration information indicates to transmit a first signal and a second signal in a target time period, the first signal is a signal for communication between the apparatus and the network device, and the second signal is a signal transmitted with assistance of the apparatus;
the processing unit is configured to determine that the first signal and/or the second signal meet/meets a first condition, and the transceiver unit is further configured to transmit the first signal in the target time period; and
the processing unit is further configured to determine that the first signal and/or the second signal do/does not meet a first condition, and the transceiver unit is further configured to transmit the second signal in the target time period.

9. The apparatus according to claim 8, wherein the first condition is that a priority of the first signal is higher than or equal to a priority of the second signal; and
the priorities of the first signal and the second signal are classified based on signal types, and there is at least one of the following signal types: a public signal, a data signal, and a control signal.

10. The apparatus according to claim 8 or 9, wherein that the first signal and/or the second signal meet/meets a first condition comprises:
the first signal is a public signal;
the first signal is a non-public signal, and the second signal is a non-public signal;
the first signal is a control signal, and the second signal is a semi-persistently scheduled signal; or
the first signal is a semi-persistently scheduled signal, and the second signal is a semi-persistently scheduled signal.

11. The apparatus according to claim 8 or 9, wherein that the first signal and/or the second signal do/does not meet a first condition comprises:
the second signal is a public signal;
the second signal is a control signal, and the first signal is a non-public signal;
the second signal is a control signal, and the first signal is a semi-persistently scheduled signal; or
the second signal is a semi-persistently scheduled signal, and the first signal is a semi-persistently scheduled signal.

12. The apparatus according to claim 8, wherein that the first signal and/or the second signal meet/meets a first condition comprises:
the first signal has at least one of the following functions: beam management, power control, connection and disconnection control, timing information, configuration information of the second signal, feedback measurement reporting, scheduling requesting, and time synchronization.

13. The apparatus according to any one of claims 8 to 12, wherein before whether the first signal and/or the second signal meet/meets the first condition is determined,
the processing unit is configured to determine that the first signal and the second signal meet a second condition, and the transceiver unit is configured to transmit the first signal and the second signal in the target time period.

14. The apparatus according to claim 13, wherein
the second condition is that a difference between power of the first signal and power of the second signal is less than or equal to a first threshold, and/or the second condition is that a difference between a modulation order of the first signal and a modulation order of the second signal is less than or equal to a second threshold.

15. A communication apparatus, comprising:
a processor, configured to execute a computer program stored in a memory, to enable the apparatus to perform the method according to any one of claims 1 to 7.

16. The apparatus according to claim 15, wherein the apparatus further comprises the memory.

17. A computer-readable storage medium, wherein the computer-readable storage medium stores a computer program, and when the computer program is run on a computer, a computer is enabled to perform the method according to any one of claims 1 to 7.

18. A computer program product, wherein the computer program product comprises instructions for performing the method according to any one of claims 1 to 7.
